# EUROPEAN PATENT APPLICATION

(11) **EP 2 107 544 A1**
(43) Date of publication of application: **07.10.2009**
(21) Application number: 09004534.5
(22) Date of filing: 30.03.2009
(51) Int. Cl.: G09C 5/00

(54) **Image decryption apparatus**

(30) Priority: 31.03.2008 JP 2008093716
(71) Applicant: Fujitsu Limited, Kawasaki-shi, Kanagawa 211-8588 (JP)
(72) Inventor: Masui, Motoo, Kawasaki-shi Kanagawa 211-8588 (JP); Anan, Taizo, Kawasaki-shi Kanagawa 211-8588 (JP); Kuraki, Kensuke, Kawasaki-shi Kanagawa 211-8588 (JP); Takahashi, Jun, Kawasaki-shi Kanagawa 211-8588 (JP); Nakagata, Shohei, Kawasaki-shi Kanagawa 211-8588 (JP)
(74) Representative: Siegert, Georg

(57) **Abstract**

A display processor displays on a display screen an encrypted image accepted by an image data acceptor. An encrypted region acquirer extracts encrypted regions contained on the encrypted image. A target region selector or an authorized target region selector selects decryption target regions from among encrypted regions contained in the encrypted image. A decryption order determiner determines a decryption order of the decryption target regions. The display processor displays on the display screen a prompt for inputting a decryption key (or a password) used for decryption of the encrypted image in each of the decryption target regions in accordance with the decryption order. A decryption key acceptor accepts the decryption key input by a decryption user. An image decryptor performs a decryption process on the encrypted image in the decryption target regions in accordance with the decryption order. A decrypted image of each decryption target region is output.

## Description

### FIELD

The embodiments discussed herein are related to an image encryption and decryption technique for encrypting visually a part of an image printed in a printed matter or of a digital image and decrypting the part.

### BACKGROUND

Leakage of important information is a serious problem as information society advances. Techniques for preventing information leakage are preferable. For example, encryption techniques for digital data to prevent the content thereof from being leaked to a third party have already been developed, and are used as an effective means to prevent information leakage.

In contrast, development of techniques for preventing information leakage from printed matters printed on paper media, for example, is not sufficient. A technique for preventing information leakage from printed matters is preferable.

In another respect, a technique for controlling authority over encrypted data is also preferable. For example, if only a password is used in encryption/decryption, a third party may easily decrypt the encrypted data if the password information is known to the third party. To avoid such a malicious decryption, a mechanism is preferable to allow only a particular person, among persons who know the password, having authority to decrypt the encrypted data.

### SUMMARY

An object of the present invention is to provide a technology which allows a user operating for decryption to learn a position of an encrypted region.

According to an aspect of the present invention, provides is an image decryption apparatus for decrypting an encrypted image having a plurality of encrypted regions with decryption keys input by a user. The image decryption apparatus includes an image data acceptor, an encrypted region acquirer, a target region selector, a decryption order determiner, a display processor, a decryption key acceptor, and an image decryptor. The image data acceptor accepts image data of the encrypted image. The encrypted region acquirer acquires position data of the encrypted regions. The target region selector selects all the encrypted regions as decryption target regions, or acquires encrypted regions selected by the user as decryption target regions. The decryption order determiner determines decryption order for the decryption target regions. The display processor displays the encrypted image on a display screen, and displays images representing positions of the decryption target regions on the encrypted image sequentially in accordance with the decryption order. The decryption key acceptor accepts a decryption key corresponding to the decryption target region, the image representing the position of the decryption target region being displayed. The image decryptor decrypts, with an accepted decryption key, the encrypted image in the decryption target region corresponding to the accepted decryption key.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF THE DRAWINGS

FIG. 1 is a flowchart illustrating an operational flow of an encryption process of an image encryption apparatus according to a first embodiment of the present invention;
FIG. 2 is a diagram illustrating an example of an encryption process of an image encryption apparatus according to a first embodiment of the present invention;
FIG. 3 is a flowchart illustrating an operational flow of a process for storing decryption information on an external storage according to a first embodiment of the present invention;
FIG. 4 is a flowchart illustrating an operational flow of a process for embedding decryption information in a header portion of an image file of an encrypted image according to a first embodiment of the present invention;
FIGs. 5A and 5B are diagrams illustrating examples of decryption information according to a first embodiment of the present invention;
FIG. 6 is a flowchart illustrating an operational flow of a first decryption process of an image decryption apparatus according to a first embodiment of the present invention;
FIG. 7 is a flowchart illustrating an operational flow of a second decryption process of an image decryption apparatus according to a first embodiment of the present invention;
FIG. 8 is a flowchart illustrating an operational flow of a third decryption process of an image decryption apparatus according to a first embodiment of the present invention;
FIG. 9 is a flowchart illustrating an operational flow of a forth decryption process of an image decryption apparatus according to a first embodiment of the present invention;
FIG. 10 is a flowchart illustrating an operational flow of a fifth decryption process of an image decryption apparatus according to a first embodiment of the present invention;
FIG. 11 is a flowchart illustrating an operational flow of a sixth decryption process of an image decryption apparatus according to a first embodiment of the present invention;
FIG. 12 is a flowchart illustrating an operational flow of a seventh decryption process of an image decryption apparatus according to a first embodiment of the present invention;
FIG. 13 is a flowchart illustrating an operational flow of an eighth decryption process of an image decryption apparatus according to a first embodiment of the present invention;
FIG. 14 is a diagram illustrating an example of a decryption process of an image decryption apparatus according to a first embodiment of the present invention;
FIG. 15 is a diagram illustrating an example of a process of retrieving decryption information performed by an image decryption apparatus according to a first embodiment of the present invention;
FIG. 16 is a diagram illustrating an example of a process of extracting decryption information performed by an image decryption apparatus according to a first embodiment of the present invention;
FIG. 17 is a diagram illustrating an example of a process of accepting selection of encrypted regions for decryption performed by an image decryption apparatus according to a first embodiment of the present invention;
FIG. 18 is a diagram illustrating an example of a process of determining a position of an encrypted region by image recognition performed by an image decryption apparatus according to a first embodiment of the present invention;
FIG. 19 is a diagram illustrating an example of a process of determining a position of an encrypted region with reference to decryption information performed by an image decryption apparatus according to a first embodiment of the present invention;
FIG. 20 is a diagram illustrating an example of a process of determining a position of an encrypted region by image recognition while referencing to decryption information performed by an image decryption apparatus according to a first embodiment of the present invention;
FIGs. 21A and 21B are diagrams illustrating examples of a process of visually displaying positions of encrypted regions performed by an image decryption apparatus according to a first embodiment of the present invention;
FIGs. 22A and 22B are diagrams illustrating examples of a process of visually displaying an authority levels assigned to encrypted regions performed by an image decryption apparatus according to a first embodiment of the present invention;
FIG. 23 is a diagram illustrating an example of a process of accepting selection of an encrypted region for decryption performed by an image decryption apparatus according to a first embodiment of the present invention;
FIGs. 24, 25A, and 25B are diagrams illustrating examples of a process of prompting a decryption user to input a decryption key for each encrypted region performed by an image decryption apparatus according to a first embodiment of the present invention;
FIG. 26 is a diagram illustrating an example of a process of determining a decryption order performed by an image decryption apparatus according to a second embodiment of the present invention;
FIG. 27 is a diagram illustrating an example of a process of successively displaying a dialog box for password input in accordance with a determined decryption order performed by an image decryption apparatus according to a second embodiment of the present invention;
FIG. 28 is a diagram illustrating an example of a process of generating a decryption order list performed by an image decryption apparatus according to a second embodiment of the present invention;
FIG. 29 is a diagram illustrating an example of a process of prompting a decryption user to input a password for two encrypted regions in the same group performed by an image decryption apparatus according to a second embodiment of the present invention;
FIG. 30 is a diagram illustrating an example of a process of successively displaying a dialog box for password input performed by an image decryption apparatus according to a second embodiment of the present invention;
FIG. 31 is a diagram illustrating an example of a process of providing decryption information to a decryption user performed by an image decryption apparatus according to a second embodiment of the present invention;
FIG. 32 is a diagram illustrating an example of a process of verifying a password performed by an image decryption apparatus according to a second embodiment of the present invention;
FIG. 33 is a flowchart illustrating an operational flow of a first decryption process of an image decryption apparatus according to a second embodiment of the present invention;
FIG. 34 is a flowchart illustrating an operational flow of a second decryption process of an image decryption apparatus according to a second embodiment of the present invention;
FIG. 35 is a flowchart illustrating an operational flow of a third decryption process of an image decryption apparatus according to a second embodiment of the present invention;
FIG. 36 is a flowchart illustrating an operational flow of a fourth decryption process of an image decryption apparatus according to a second embodiment of the present invention;
FIG. 37 is a flowchart illustrating an operational flow of a fifth decryption process of an image decryption apparatus according to a second embodiment of the present invention;
FIG. 38 is a flowchart illustrating an operational flow of a sixth decryption process of an image decryption apparatus according to a second embodiment of the present invention;
FIG. 39 is a flowchart illustrating an operational flow of a seventh decryption process of an image decryption apparatus according to a second embodiment of the present invention;
FIG. 40 is a flowchart illustrating an operational flow of an eighth decryption process of an image decryption apparatus according to a second embodiment of the present invention;
FIG. 41 is a block diagram illustrating a system configuration of an image encryption apparatus according to embodiments of the present invention;
FIGs. 42 and 43 are block diagrams illustrating a system configuration of an image decryption apparatus according to embodiments of the present invention; and
FIG. 44 is a block diagram illustrating a system configuration of a computer.

### DESCRIPTION OF EMBODIMENTS

Specific examples of printed matters requiring information leakage control include bills for purchased goods, personal identification numbers such as credit card numbers and social assurance numbers, medical charts, school grade reports, customer lists, etc. The techniques discussed in the embodiments may be used, for example, to control information leakage by encrypting an important part of printed matters.

We have proposed an encryption technique for printed matters (for example, Japanese Laid-open Patent Publication No. 2008-301044). In accordance with the technique, an image region for encryption is divided into a plurality of blocks, image data in the image region is scrambled by the blocks in accordance with a parameter obtained from an input password, and pixel values in the image region are converted regularly to generate an encrypted image. A particular pattern derived by the regular conversion of the pixel values serves as an indicator for determining a detailed position within the encrypted image during decryption. Even when a printed encrypted image is distorted in printing or scanning, position correction may allow highly accurate decryption.

We have also proposed an encryption technique with authority control (for example, U.S. Patent Publication No. 2008-0298596). In accordance with the technique, a key control server controls encryption keys to control authority for encrypted images.

In Japanese Laid-open Patent Publication No. 2008-301044, we have discussed no means for specifying an encrypted region for decryption when a plurality of encrypted regions are contained on an encrypted image to be decrypted. A screen for prompting a user (referred to as a decryption user) operating for decryption to input a decryption key is presented, but the decryption user has difficulty in learning which encrypted region is waiting for the decryption key. When a plurality of encrypted regions encrypted with different encryption keys are contained in the encrypted image, the decryption user needs to correctly select the encrypted region before inputting the decryption key. This inconveniences the decryption user.

In both Japanese Laid-open Patent Publication No. 2008-301044 and U.S. Patent Publication No. 2008-0298596, we have discussed no means for flexibly selecting an encrypted region on an encrypted image, on which a decryption user applies a decryption process. For example, we have discussed in Japanese Laid-open Patent Publication No. 2008-301044 that a part of the encrypted image may be extracted as a decryption target. However, when regions not to be decrypted and regions to be decrypted are mixed, the decryption user may have difficulty in selecting only the regions to be decrypted. As we have discussed in U.S. Patent Publication No. 2008-0298596, decryption information for each encrypted region, such as a position, a decryption key, and decryption authority, may be obtained from an external storage for an entire encrypted image input to an image decryption apparatus. Once the position of the encrypted region on the image is obtained, the entire encrypted image may be decrypted. But it may be difficult to flexibly select some of the encrypted regions to be decrypted.

As we have discussed in U.S. Patent Publication No. 2008-0298596, authority for decryption is assigned and then an encryption process is performed in an image encryption apparatus. An image decryption apparatus acquires decryption information for the encrypted image, and decrypts image data in an encrypted region over which the decryption user has authority for decryption with reference to information of decryption authority contained in the decryption information. No means is discussed for the decryption user to learn the decryption authority assigned to each encrypted region. The decryption user may have difficulty in performing smoothly a decryption process while learning which encrypted region the decryption user is authorized to decrypt.

When data in a plurality of encrypted regions on an encrypted image is encrypted with the same encryption key, a known image decryption apparatus lists the encrypted regions in the image, and prompts the decryption user to enter the decryption key for each encrypted region. This repeatedly requests the decryption user to input the same decryption key. Such an arrangement not only inconveniences the decryption user but also may cause the decryption user to enter an erroneous input.

Embodiments of the present invention are discussed below with reference to the drawings.

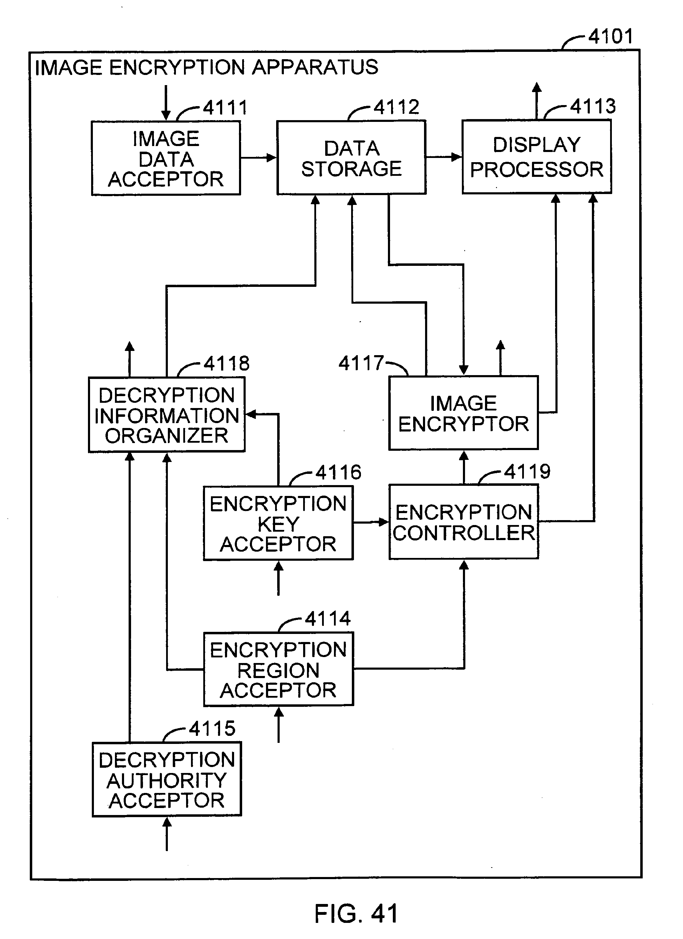

FIG. 41 is a block diagram illustrating a system configuration of an image encryption apparatus according to embodiments of the present invention. The image encryption apparatus 4101 includes an image data acceptor 4111, a data storage 4112, a display processor 4113, an encryption region acceptor 4114, a decryption authority acceptor 4115, an encryption key acceptor 4116, an image encryptor 4117, a decryption information organizer 4118, and an encryption controller 4119. The image data acceptor 4111 accepts image data, input by a user (referred to as an encryption user) operating for encryption, of an image to be encrypted. The data storage 4112 stores data including input image data. The display processor 4113 displays data on a display screen. The encryption region acceptor 4114 accepts a specification, specified by the encryption user, of an encryption region. The decryption authority acceptor 4115 accepts decryption authority assigned for the encryption region by the encryption user. The encryption key acceptor 4116 accepts an encryption key input by the encryption user. The image encryptor 4117 encrypts the image data with the encryption key. The decryption information organizer 4118 organizes decryption information including information of the encryption region, the decryption authority, and a decryption key (assumed to be the same with the encryption key in the embodiments). The encryption controller 4119 controls whole the image encryption apparatus 4101.

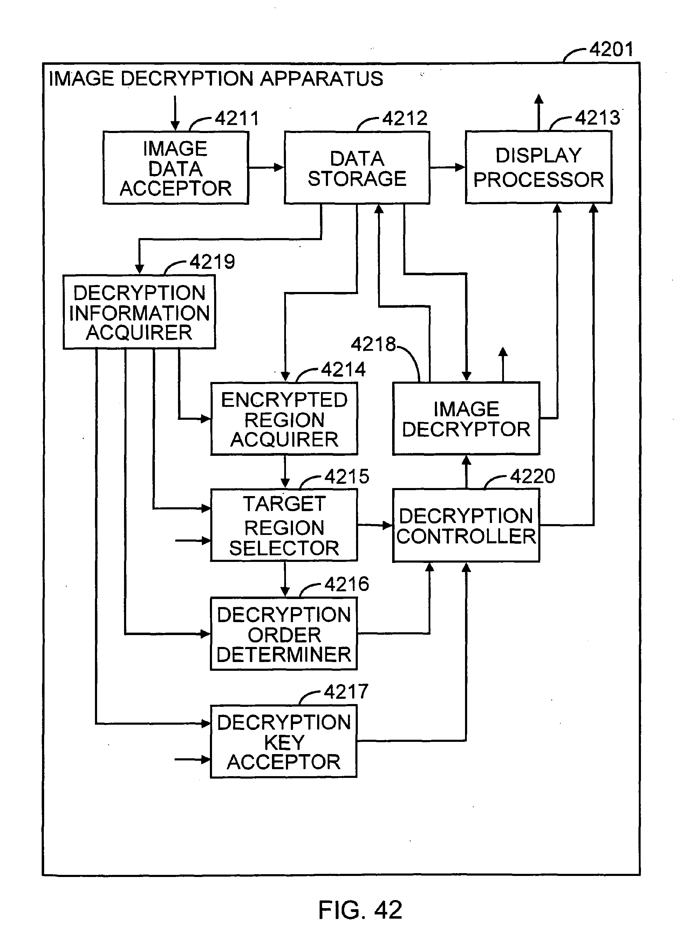

FIG. 42 is a block diagram illustrating a system configuration of an image decryption apparatus according to embodiments of the present invention. The image decryption apparatus 4201 includes an image data acceptor 4211, a data storage 4212, a display processor 4213, an encrypted region acquirer 4214, a target region selector 4215, a decryption order determiner 4216, a decryption key acceptor 4217, an image decryptor 4218, a decryption information acquirer 4219, and a decryption controller 4220.

The image data acceptor 4211 accepts image data, input by a decryption user, of an encrypted image to be decrypted. The data storage 4212 stores data including input image data. The display processor 4213 displays data on a display screen. The encrypted region acquirer 4214 acquires position data of an encrypted region. The target region selector 4215 selects a decryption target region from among encrypted regions. The decryption order determiner 4216 determines decryption order for decrypting encrypted images in decryption target regions. The decryption key acceptor 4217 accepts a decryption key input by the decryption user. The image decryptor 4218 decrypts the image data with the decryption key. The decryption information acquirer 4219 acquires the decryption information. The decryption controller 4220 controls whole the image decryption apparatus 4201.

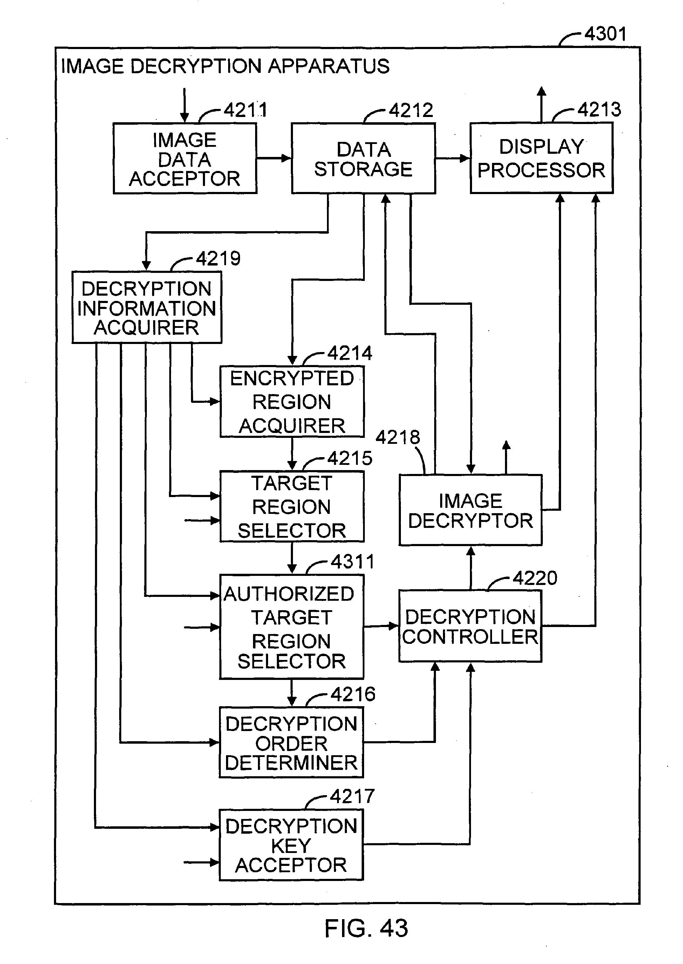

FIG. 43 is an alternative block diagram illustrating system configurations of image decryption apparatuses according to embodiments of the present invention.

The image decryption apparatus 4301 in FIG. 43 is different from the image decryption apparatus 4201, in that the image decryption apparatus further includes an authorized target region selector 4311. The authorized target region selector 4311 reduces the decryption target regions selected by the target region selector 4215, to include only the encrypted regions on which a decryption user has a decryption authority.

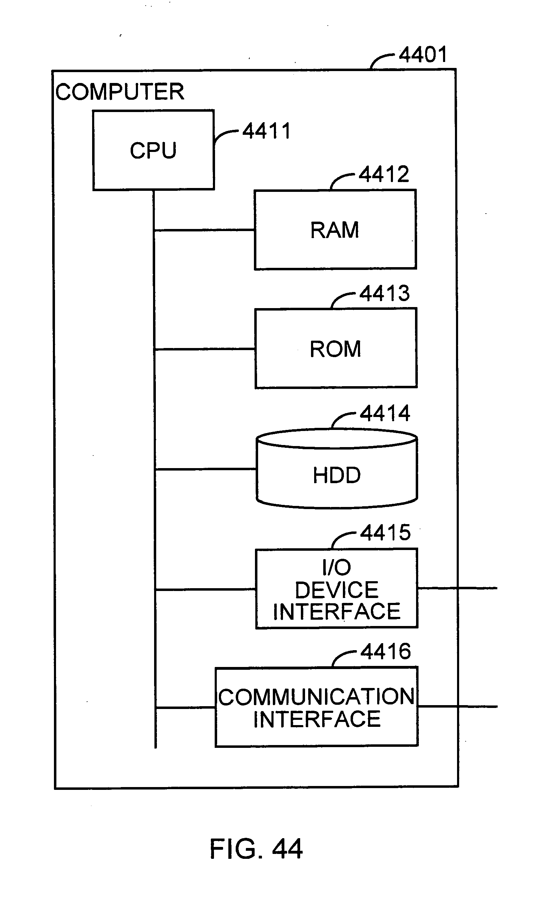

An encryption process performed by the image encryption apparatus 4101 or a decryption process performed by the image decryption apparatuses 4201 or 4301 may also be performed by a common computer provided with a pertinent program. FIG. 44 is a block diagram illustrating a system configuration of a computer. When a computer 4401 executes the encryption process or the decryption process, a program stored in a read only memory (ROM) 4413 or in a hard disk drive (HDD) 4414 is loaded on a random access memory (RAM) 4412 and a central processing unit (CPU) 4411 interprets the program and executes instructions included in the program. Data may be input or output via an input/output (I/O) device interface 4415 or a communication interface 4416 if needed.

### First Embodiment

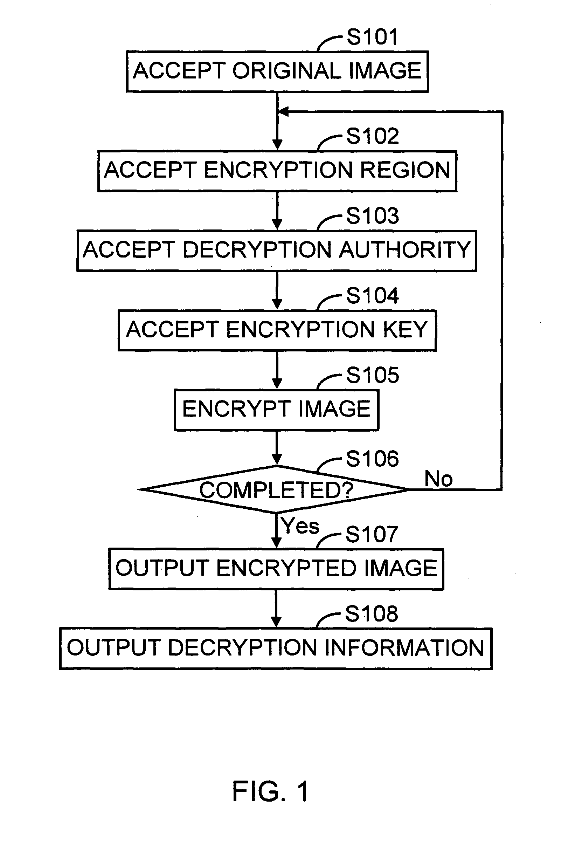

FIG. 1 is a flowchart illustrating an operational flow of an encryption process of an image encryption apparatus according to a first embodiment of the present invention. The encryption process may be performed by the image encryption apparatus 4101. Alternatively, the encryption process may be performed by the computer 4401.

The encryption process will be discussed with reference to FIG. 1.

In Operation S101, the image data acceptor 4111 accepts image data, input by an encryption user, of an original image to be encrypted and stores the image data in the data storage 4112. The display processor 4113 displays the original image on a display screen which the encryption user observes while operating for encryption.

In Operation S102, the encryption region acceptor 4114 accepts a region, specified by the encryption user, on the original image as an encryption region.

In Operation S103, the decryption authority acceptor 4115 accepts information of decryption authority, assigned by the encryption user, which serves as a condition for limiting decryption of the original image in the encryption region. The information of decryption authority may include information of a division or a title of a decryption user, for example. Furthermore, the condition for limiting decryption may include limitation by time and date, limitation by period, and limitation by the number of decryption operations.

In Operation S104, the encryption key acceptor 4116 accepts an encryption key, input by the encryption user, used for encryption of the original image in the encryption region. The encryption key may be a hash value of a password input by the encryption user.

In Operation S105, the image encryptor 4117 performs an image encryption process on the original image in the encryption region with the encryption key. The original image in the encryption region is encrypted and superimposed on the original image to get an encrypted image, that is, a document in which an image in the encryption region is encrypted.

In Operation S106, if there are a plurality of encryption regions, the encryption controller 4119 checks whether the image encryption process has been performed for all the encryption regions. When the image encryption process has not been performed for all the encryption regions ("No" in Operation S106), the encryption process returns to Operation S102. This allows image encryption for overlapped encryption regions.

In Operation S107, when the image encryption process has been performed for all the encryption regions ("Yes" in Operation S106), an encrypted image which is the original image having a plurality of encryption regions in which the original image therein has been encrypted is output. The encrypted image may be displayed on the display screen by the display processor 4113, stored in the data storage 4112 or an external storage, or output to a printer, a facsimile machine, etc.

In Operation S108, the decryption information organizer 4118 organizes and outputs decryption information including information of positions of the encryption regions, decryption authorities, and decryption key for verification. The decryption information may be stored in the data storage 4112 or an external storage, or combined to an image file, for example. The decryption information may further include an expiration date or the maximum number of decryption operations for each encryption region.

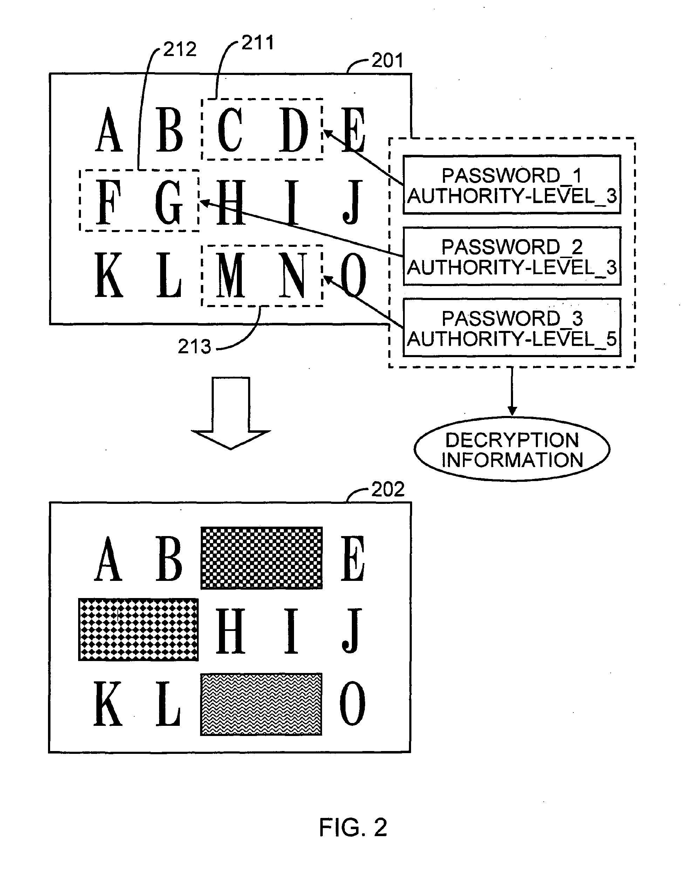

FIG. 2 is a diagram illustrating an example of an encryption process of an image encryption apparatus according to a first embodiment of the present invention. In the original image 201, encryption regions 211 to 213, each of which includes a part of a character image area, are specified by the encryption user. Authority levels different from region to region are assigned to the encryption regions 211 to 213 by the encryption user and images therein are encrypted by the image encryption apparatus 4101.

An encrypted image 202 is derived by repeating the image encryption process for each encryption region with a password or an encryption key generated from the password.

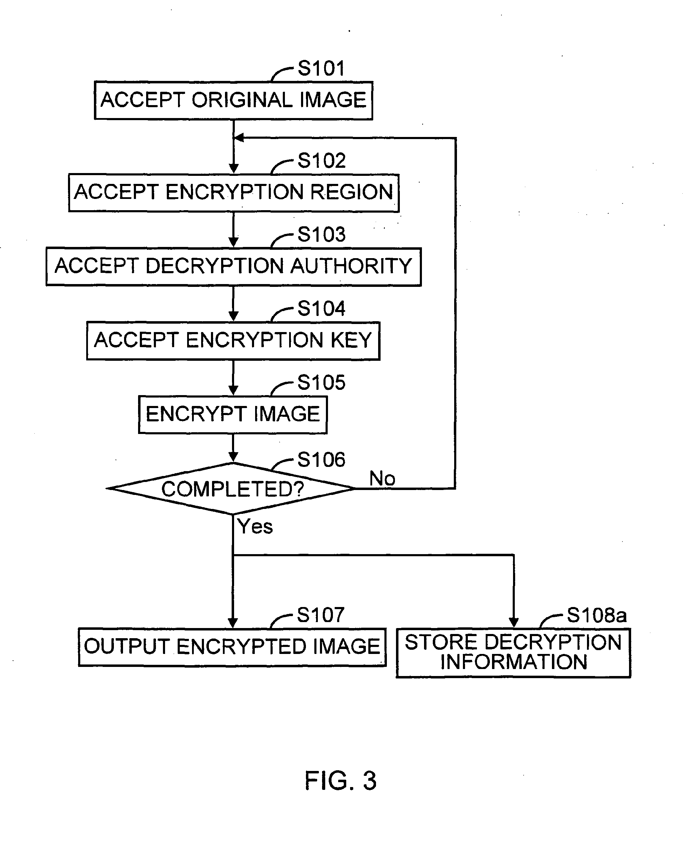

FIG. 3 is a flowchart illustrating an operational flow of a process for storing decryption information on an external storage. The process is substantially identical to the process illustrated in FIG. 1.

In Operation S108a, when image encryption for all the specified regions has been completed ("Yes" in Operation S106), in parallel with Operation S107, the decryption information organizer 4118 stores, on an external storage of a file server or the like, the decryption information together with document identification information identifiable of a document.

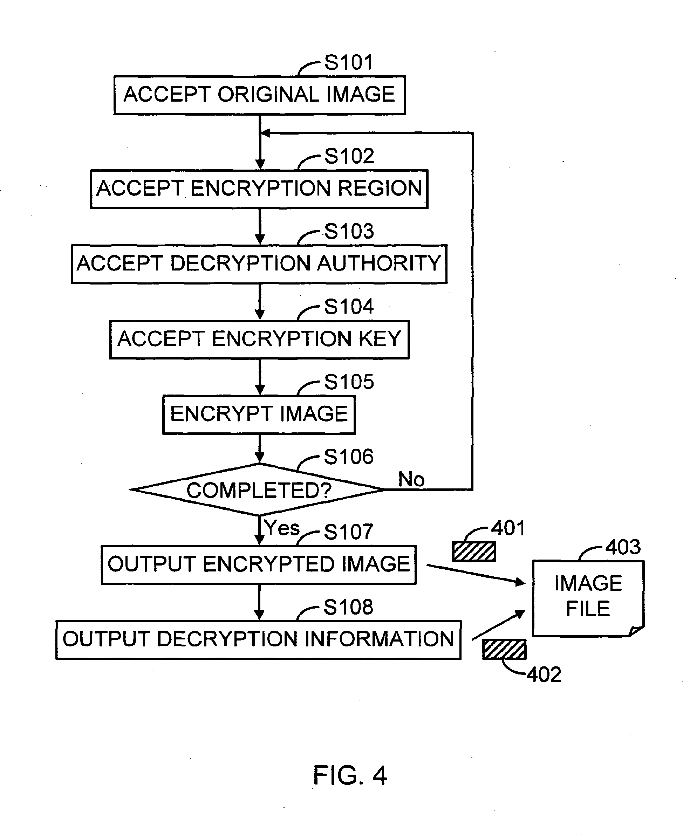

FIG. 4 is a flowchart illustrating an operational flow of a process for embedding decryption information in a header portion of an image file of an encrypted image according to a first embodiment of the present invention. The image file of the encrypted image has been generated by the image encryptor 4117 in the same process as illustrated in FIG. 1 or 3. The process is substantially identical to the process illustrated in FIG. 1. The decryption information 402 output from the decryption information organizer 4118 is embedded into a header portion of the image file 403 of the encrypted image 401 output from the image encryptor 4117. Alternatively, the image file 403 of the encrypted image 401 may be expanded on a memory, the decryption information 402 may be embedded in the header portion of the image file 403 on the memory, and then the image file 403 of the encrypted image 401 containing the decryption information 402 in the header portion thereof may be output.

As illustrated in FIG. 3 or 4, the image encryption apparatus 4101 may store the decryption information 402 useful for decrypting the encrypted image 401 while outputting the encrypted image 401 generated by the image encryptor 4117.

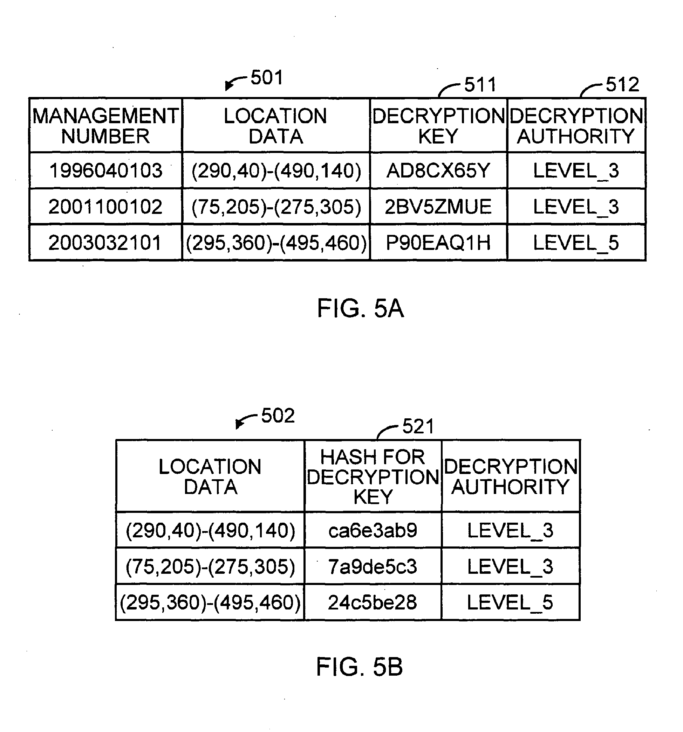

FIGs. 5A and 5B are diagrams illustrating examples of decryption information according to a first embodiment of the present invention. The decryption information 501 contains the decryption key 511 and the authority level 512 assigned during the encryption process of the image encryption apparatus 4101.

FIG. 5A illustrates an example of decryption information stored in an external storage as illustrated in FIG. 3.

According to FIG. 5A, a management number "1996040103" is assigned for the encryption region 211. The top left coordinates of the encryption region 211 are (290, 40), and the bottom right coordinates are (490, 140). "AD8CX65Y" is generated as a decryption key for the input password_1. "Level_3" is assigned as a decryption authority. Similarly, assigned for the encryption region 212 are a management number "2001100102," the top left coordinates (75, 205), the bottom right coordinates (275, 305), a decryption key "2BV5ZMUE," and "Level_3" as a decryption authority level. Similarly, assigned for the encryption region 213 are a management number "2003032101," the top left coordinates (295, 360), the bottom right coordinates (495, 460), a decryption key "P90EAQ1H," and "Level_5" as a decryption authority level.

FIG. 5B illustrates an example of decryption information embedded in data of an encrypted image (in a header portion of an image file thereof, for example) as illustrated in FIG. 4. Since the decryption information 502 is contained in the data of the encrypted image in this case, containing the decryption key 511 as it is in the decryption information 502 is not advisable from the standpoint of security. In the first embodiment, a hash value 521 of the decryption key 511 is contained in the decryption information 502 to verify the decryption key input by a decryption user.

According to FIG. 5B, assigned for the encryption region 211 are the top left coordinates (290, 40), the bottom right coordinates (490, 140), a hash value "ca6e3ab9" for a decryption key for the input password_1, and an authority level "Level_3." Similarly assigned in the encryption region 212 are the top left coordinates (75, 205), the bottom right coordinates (275, 305), a hash value "7a9de5c3" for a decryption key, and an authority level "Level_3." Assigned in the encryption region 213 are the top left coordinates (295, 360), the bottom right coordinates (495, 460), a hash value "24c5be28" for a decryption key, and an authority level "Level_5."

In the first embodiment, the password and the authority level are not associated with each other. By storing the decryption information on an external management server of the image encryption apparatus 4101, the management server may manage the association between the password and the authority level for each region.

The password associated with the authority level on a one-to-one correspondence may be used in the encryption process. For example, if the encryption region 211 and the encryption region 212 are assigned with the same authority level, the two encryption regions may be encrypted with the same password. The image decryption apparatuses 4201 or 4301 may decrypt an encrypted image in the encryption region 211 and the encryption region 212 with the same password at the same time.

The decryption process of an encrypted image performed by the image decryption apparatuses 4201 or 4301 will be discussed below.

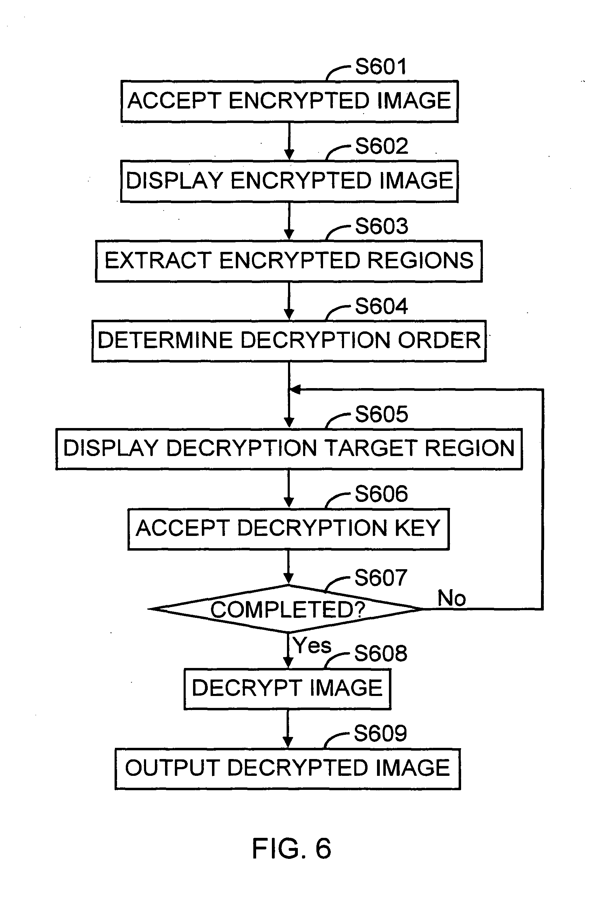

FIG. 6 is a flowchart illustrating an operational flow of a first decryption process of an image decryption apparatus according to a first embodiment of the present invention. The first decryption process may be performed by the image decryption apparatus 4201. Alternatively, the first decryption process may be performed by the computer 4401. The first decryption process will be discussed with reference to FIG. 6.

In Operation S601, the image data acceptor 4211 accepts image data, input by a decryption user, of an encrypted image to be decrypted and stores the image data in the data storage 4212.

In Operation S602, the display processor 4213 displays the encrypted image on a display screen which the decryption user observes while operating for decryption.

In Operation S603, the encrypted region acquirer 4214 extracts, by image recognition, encrypted regions contained on the input encrypted image. And the target region selector 4215 selects all extracted encrypted regions as encrypted regions to be decrypted (referred to as decryption target regions).

In Operation S604, the decryption order determiner 4216 determines a decryption order for all the decryption target regions.

In Operation S605, the display processor 4213 displays, on the display screen, a prompt for inputting a decryption key (or a password) used for decryption of the encrypted image in each of the decryption target regions in accordance with the decryption order.

In Operation S606, the decryption key acceptor 4217 accepts the decryption key input by the decryption user.

In Operation S607, the decryption controller 4220 checks whether decryption keys for all the decryption target regions have been accepted. When the decryption keys for all the decryption target regions have not been accepted ("No" in Operation S607), the process returns to Operation S605.

In Operation S608, when the decryption keys for all the decryption target regions have been accepted ("Yes" in Operation S607), the image decryptor 4218 performs successively the first decryption process on the encrypted image in all the decryption target regions in accordance with the decryption order. Encrypted images in all the decryption target regions are thus decrypted.

In Operation S609, a decrypted image in each decryption target region is output. Alternatively, the input encrypted image in which the encrypted image in each encrypted region has been decrypted is output.

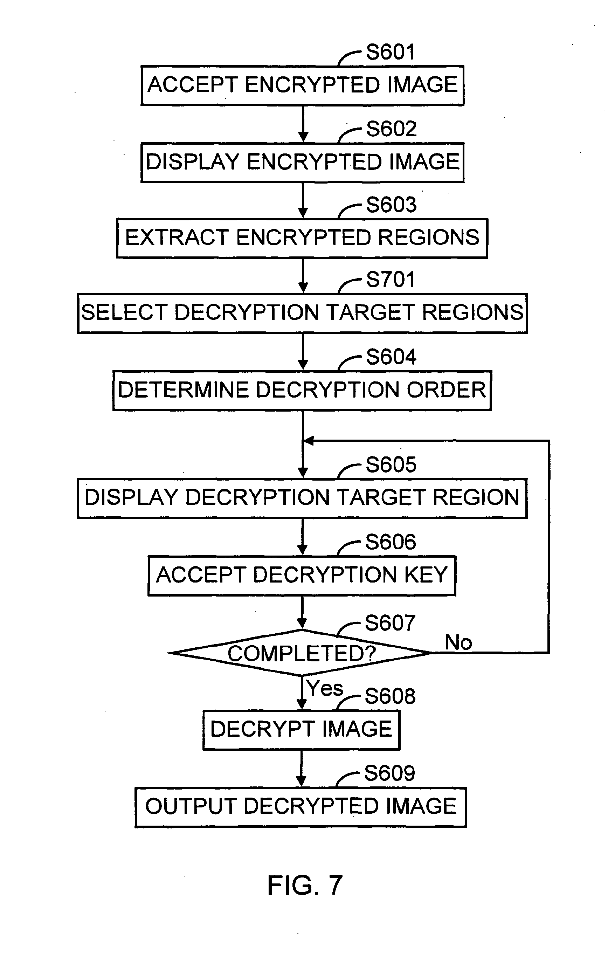

FIG. 7 is a flowchart illustrating an operational flow of a second decryption process of an image decryption apparatus according to a first embodiment of the present invention. The second decryption process may be performed by the image decryption apparatus 4201.

In contrast with the first decryption process illustrated in FIG. 6, the second decryption process further includes Operation S701.

In Operation S603, the encrypted region acquirer 4214 extracts, by image recognition, encrypted regions contained on the input encrypted image.

In Operation S701, the decryption user specifies an encrypted region from among all extracted encrypted regions displayed on the display screen. For example, the user specifies an area containing the encrypted region with a mouse by dragging or clicks the inside of the region with a mouse. The target region selector 4215 selects the encrypted region specified by the decryption user, as a decryption target region.

In Operation S604, the decryption order determiner 4216 determines a decryption order for the decryption target regions specified by the user.
Thus, the same decryption process as the first decryption process is performed on the encrypted regions specified by the decryption user.

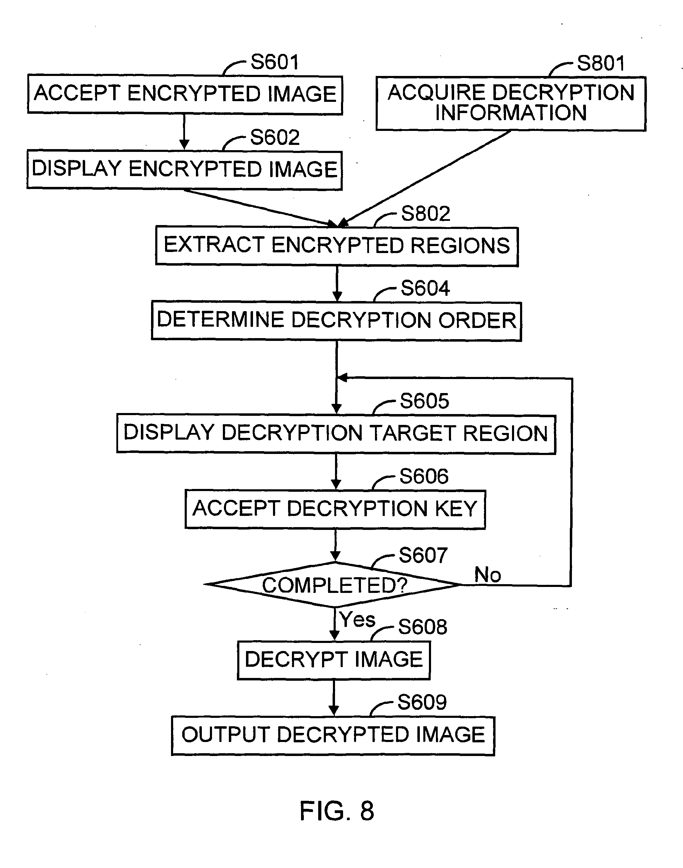

FIG. 8 is a flowchart illustrating an operational flow of a third decryption process of an image decryption apparatus according to a first embodiment of the present invention. The third decryption process may be performed by the image decryption apparatus 4201.

In Operation S601, the image data acceptor 4211 accepts image data, input by a decryption user, of an encrypted image to be decrypted and stores the image data in the data storage 4212 in the same manner as in the first decryption process illustrated in FIG. 6.

In Operation S602, the display processor 4213 displays the encrypted image on a display screen which the decryption user observes while operating for decryption.

In Operation S801, at the same time, the decryption information acquirer 4218 acquires decryption information such as illustrated in FIGs. 5A or 5B.

In Operation S802, the encrypted region acquirer 4214 extracts encrypted regions contained on the input encrypted image, by image recognition or from the decryption information or by a combination of both. And, the target region selector 4215 selects all extracted encrypted regions as decryption target regions.

In Operation S604, the decryption order determiner 4216 determines a decryption order for all the decryption target regions with reference to the decryption information.

In Operation S605, the display processor 4213 displays, on the display screen, a prompt for inputting a decryption key (or a password) used for decryption of the encrypted image in each of the decryption target regions in accordance with the decryption order.

In Operation S606, the decryption key acceptor 4217 accepts the decryption key input by the decryption user.

In Operation S607, the decryption controller 4220 checks whether decryption keys for all the decryption target regions have been accepted. When the decryption keys for all the decryption target regions have not been accepted ("No" in Operation S607), the process returns to Operation S605.

In Operation S608, when the decryption keys for all the decryption target regions have been accepted ("Yes" in Operation S607), the image decryptor 4218 performs successively the decryption process on the encrypted image in all the decryption target regions in accordance with the decryption order. Encrypted images in all the decryption target regions are thus decrypted.

In Operation S609, a decrypted image of each decryption target region is output. Alternatively, the input encrypted image in which the encrypted image in each encrypted region has been decrypted is output.

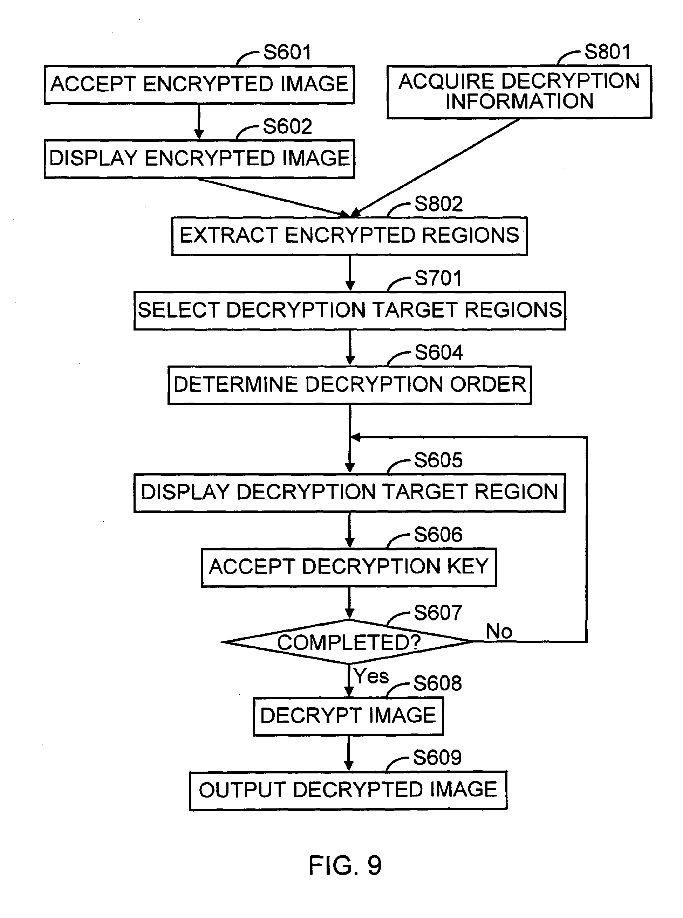

FIG. 9 is a flowchart illustrating an operational flow of a forth decryption process of an image decryption apparatus according to a first embodiment of the present invention. The forth decryption process may be performed by the image decryption apparatus 4201.

The forth decryption process is different from the third decryption process illustrated in FIG. 8 in that the forth decryption process further includes Operation S701.

In Operation S802, the encrypted region acquirer 4214 extracts encrypted regions contained on the input encrypted image, by image recognition or from the decryption information or by a combination of both.

In Operation S701, the target region selector 4215 selects decryption target regions specified by the user, from among all extracted encrypted regions.

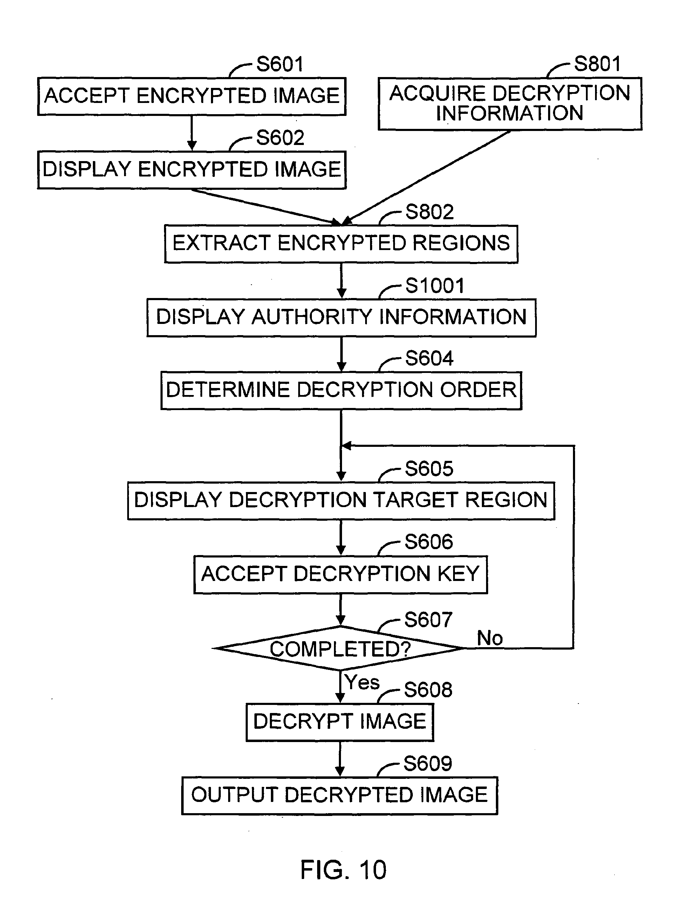

FIG. 10 is a flowchart illustrating an operational flow of a fifth decryption process of an image decryption apparatus according to a first embodiment of the present invention. The fifth decryption process may be performed by the image decryption apparatus 4301.

The fifth decryption process is different from the third decryption process illustrated in FIG. 8 in that the fifth decryption process further includes Operation S1001.

In Operation S802, the encrypted region acquirer 4214 extracts encrypted regions contained on the input encrypted image, by image recognition or from the decryption information or by a combination of both. And the target region selector 4215 selects all extracted encrypted regions as decryption target regions.

In Operation S1001, the display processor 4213 visually displays extracted encrypted regions and the decryption authorities thereof on the display screen. And the authorized target region selector 4311 automatically reduces the decryption target regions to include only regions on which the decryption user has decryption authority

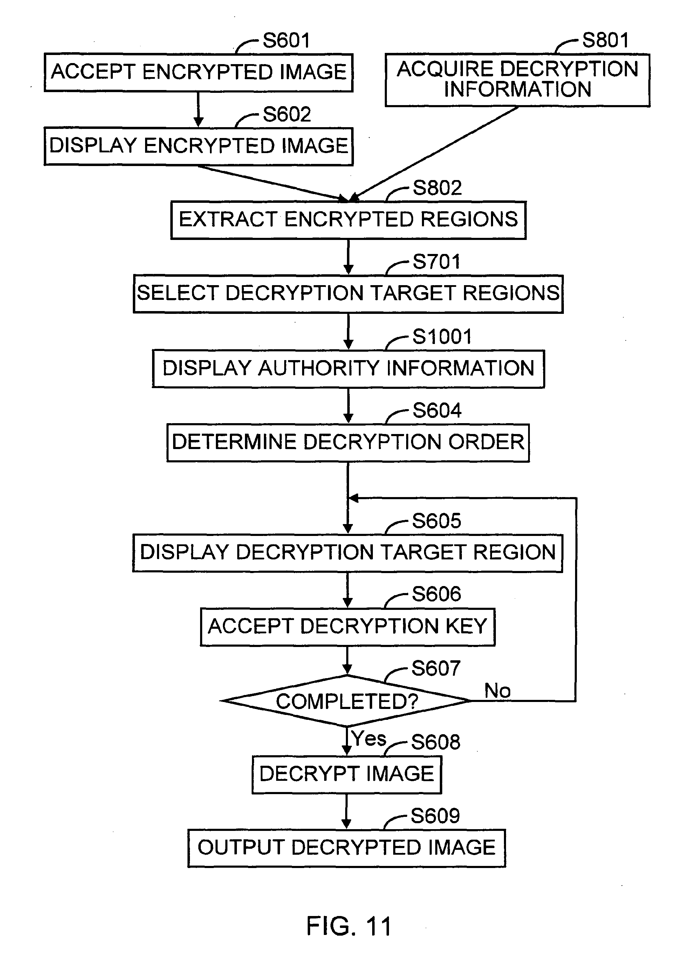

FIG. 11 is a flowchart illustrating an operational flow of a sixth decryption process of an image decryption apparatus according to a first embodiment of the present invention. The sixth decryption process may be performed by the image decryption apparatus 4301.

The sixth decryption process is different from the third decryption process illustrated in FIG. 8 in that the sixth decryption process further includes Operation S701 and Operation S1001.

In Operation S802, the encrypted region acquirer 4214 extracts encrypted regions contained on the input encrypted image, by image recognition or from the decryption information or by a combination of both.

In Operation S701, the target region selector 4215 selects decryption target regions specified by the user, from among all extracted encrypted regions.

In Operation S1001, the display processor 4213 visually displays the decryption target regions specified by the user, and the decryption authorities thereof on the display screen. And the authorized target region selector 4311 automatically reduces the decryption target regions to include only regions on which the decryption user has decryption authority.

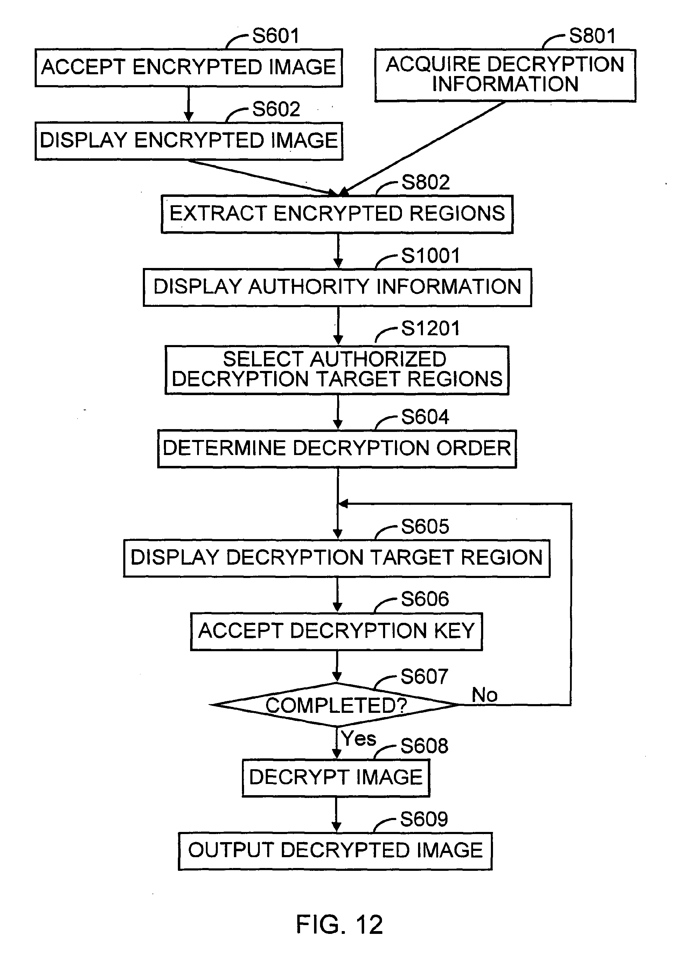

FIG. 12 is a flowchart illustrating an operational flow of a seventh decryption process of an image decryption apparatus according to a first embodiment of the present invention. The seventh decryption process may be performed by the image decryption apparatus 4301.

The seventh decryption process is different from the third decryption process illustrated in FIG. 8 in that the seventh decryption process further includes Operations S1001 and S1201.

In Operation S802, the encrypted region acquirer 4214 extracts encrypted regions contained on the input encrypted image, by image recognition or from the decryption information or by a combination of both. And the target region selector 4215 selects all extracted encrypted regions as decryption target regions.

In Operation S1001, the display processor 4213 visually displays extracted encrypted regions and the decryption authorities thereof on the display screen.

In Operation S1201, the decryption user specifies an encrypted region on which the decryption user has decryption authority from among all decryption target regions displayed on the display screen. For example, the user specifies an area containing the encrypted region with a mouse by dragging or clicks the inside of the region with a mouse. The authorized target region selector 4311 reduces the decryption target regions to include only the encrypted region specified by the decryption user, on which the decryption user has decryption authority.

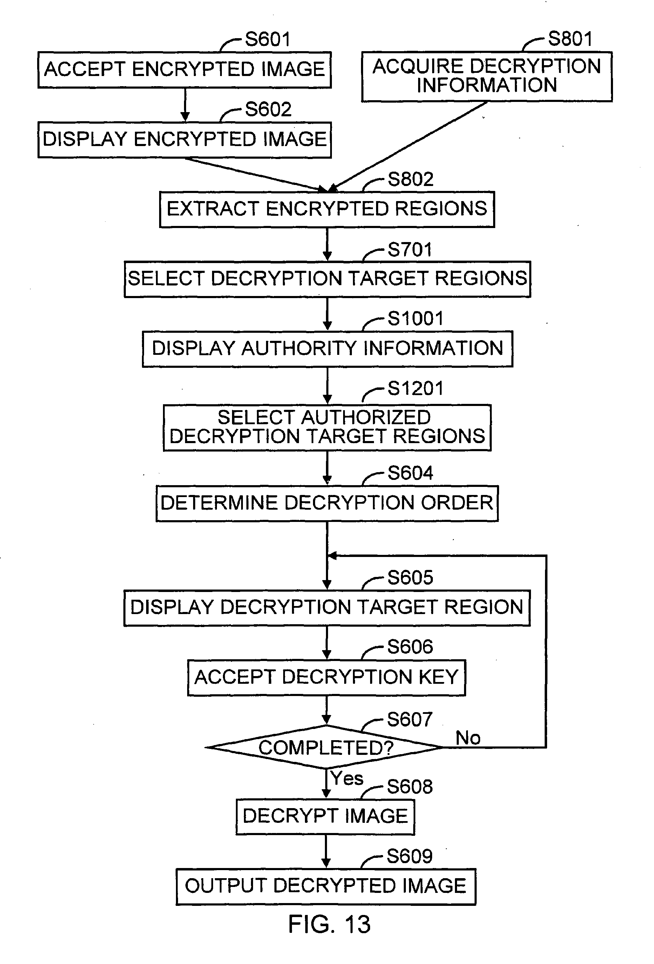

FIG. 13 is a flowchart illustrating an operational flow of an eighth decryption process of an image decryption apparatus according to a first embodiment of the present invention. The eighth decryption process may be performed by the image decryption apparatus 4301.

The eighth decryption process is different from the third decryption process illustrated in FIG. 8 in that the eighth decryption process further includes Operations S701, S1001 and S1201.

In Operation S802, the encrypted region acquirer 4214 extracts encrypted regions contained on the input encrypted image, by image recognition or from the decryption information or by a combination of both.

In Operation S701, the target region selector 4215 selects decryption target regions specified by the user, from among all extracted encrypted regions.

In Operation S1001, the display processor 4213 visually displays extracted encrypted regions specified by the user, and the decryption authorities thereof on the display screen.

In Operation S1201, the decryption user specifies an encrypted region on which the decryption user has decryption authority from among all decryption target regions displayed on the display screen. For example, the user specifies an area containing the encrypted region with a mouse by dragging or clicks the inside of the region with a mouse. The authorized target region selector 4311 reduces the decryption target regions to include only the encrypted region specified by the decryption user, on which the decryption user has decryption authority.

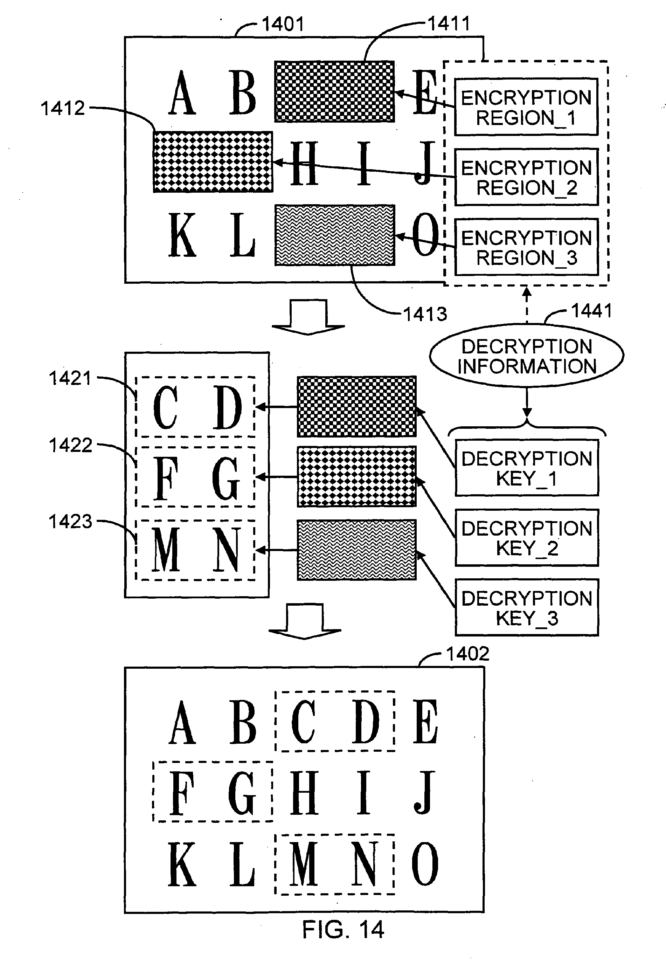

FIG. 14 is a diagram illustrating an example of a decryption process of an image decryption apparatus according to a first embodiment of the present invention. The decryption process may be performed by the image decryption apparatuses 4201 or 4301. The decryption processes on each apparatuses are basically identical, and the decryption process on the decryption apparatus 4201 will be discussed below.

The image decryption apparatus 4201 acquires, as an input image, an encrypted image 1401 output through an encryption process of the image encryption apparatus 4101 as illustrated in FIG. 2, for example. Furthermore, the image decryption apparatus 4201 acquires, in operation S801 of FIG. 8 for example, decryption information 1441 as illustrated in FIG. 5A or 5B.

In the first embodiment, the decryption order determiner 4216 determines a decryption order of the decryption target regions as an inverse of an order in which the decryption target regions has been encrypted. Thus, the decryption key acceptor 4217 first acquires position data of encrypted region 1413 with reference to the decryption information 1441. More specifically, the top left coordinates (295, 360), and the bottom right coordinates (495, 460) are acquired as the position data of the encrypted region 1413. In accordance with the position data, the display processor 4213 identifies an image region corresponding to the encrypted region 1413 on the encrypted image 1401 acquired as the input image.

Similarly, the decryption key acceptor 4217 acquires from the decryption information 1441 the top left coordinates (75, 205) and the bottom right coordinates (275, 305) of the encrypted region 1412, and the display processor 4213 identifies an image region corresponding to the encrypted region 1412 on the encrypted image 1401. Furthermore, the decryption key acceptor 4217 acquires the top left coordinates (290, 40) and the bottom right coordinates (490, 140) of the encrypted region 1411, and the display processor 4213 identifies an image region corresponding to the encrypted region 1411 on the encrypted image 1401.

The display processor 4213 displays, on the display screen, a prompt for inputting a decryption key used for decryption of the encrypted image in each of the encrypted regions. The decryption key acceptor 4217 thus acquires, from the decryption user, the decryption keys for the encrypted regions in accordance with the decryption order, namely the encrypted region 1413, the encrypted region 1412, and the encrypted region 1411.

The decryption key acceptor 4217 verifies input decryption keys with reference to the decryption information 1441. When the decryption keys have been correctly input, i.e., a decryption key_3 has been input for the encrypted region 1413, a decryption key_2 has been input for the encrypted region 1412, and a decryption key_1 has been input for the encrypted region 1411, then verification of the input decryption keys with reference to the decryption information 1441 becomes successful. The image decryptor 4218 then performs the decryption process on the input image in the encrypted regions successively with input decryption keys and results a decrypted image 1423 for the encrypted region 1413, a decrypted image 1422 for the encrypted region 1412, a decrypted image 1421 for the encrypted region 1411.

Finally, the decrypted image of each encrypted region is superimposed on the encrypted image 1401 to obtain a decrypted image 1402.

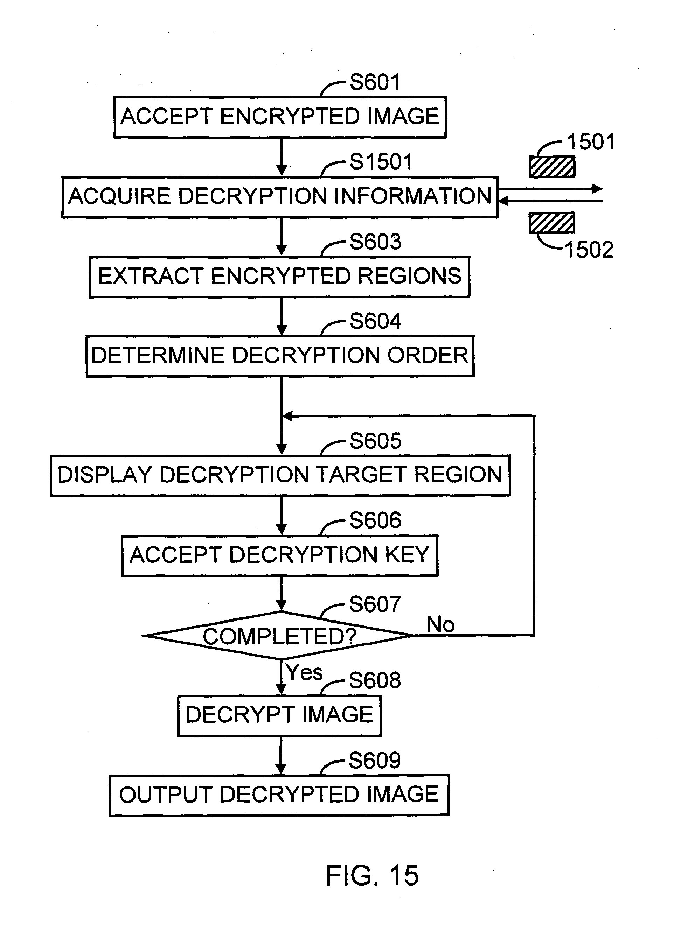

FIG. 15 is a diagram illustrating an example of a process of retrieving decryption information performed by an image decryption apparatus according to a first embodiment of the present invention.

It is assumed that a series of decryption information 1502 for each encrypted image is stored together with information (image ID) 1501 identifying the encrypted image in an external storage. The image ID 1501 may be embedded in the encrypted image by information embedding method such as digital watermark, bar code, two-dimensional bar code, or steganography.

The process illustrated in FIG. 15 is basically identical to the first decryption process illustrated in FIG. 6.

In Operation S1501, the decryption information acquirer 4219 acquires, from the input encrypted image accepted in Operation S601, an image ID 1501 embedded in the encrypted image, in accordance with an information extraction method corresponding to the information embedding method. The decryption information acquirer 4219 may acquire decryption information 1502 from the external storage by using the image ID 1501 as a search key.

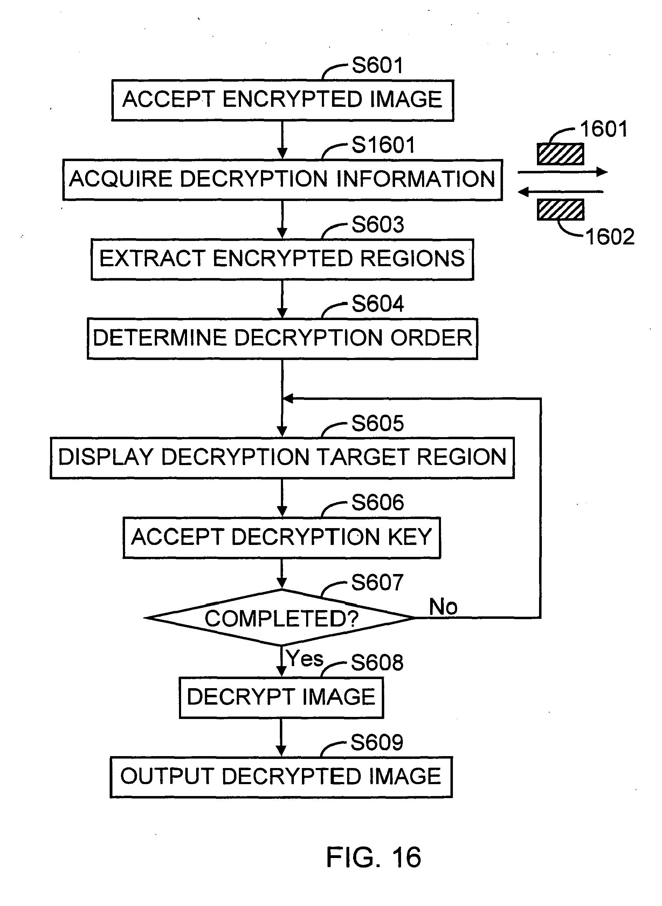

FIG. 16 is a diagram illustrating an example of a process of extracting decryption information performed by an image decryption apparatus according to a first embodiment of the present invention. In the example illustrated in FIG. 16, it is assumed that the decryption information is embedded in a header portion of an image file of the encrypted image as illustrated in FIG. 4.

In Operation S1601, the decryption information acquirer 4219 extracts the decryption information 1602 contained in the header portion of the image file 1601 of the encrypted image accepted in Operation S601, by analyzing data in the header portion.

When the decryption information 1602 is contained in the header portion of the image file 1601, correspondence relation of the decryption information 1602 and the encrypted image 1601 is evident, and there is no need for embedding in the encrypted image the image ID for associating the decryption information 1602 and the image file 1601. When image decryption of a scanned image from a printed matter is expected, the image ID or the decryption information 1602 is preferably embedded into the encrypted image by information embedding method such as digital watermark, bar code, two-dimensional bar code, or steganography, because information contained in the header portion of the image file 1601 may not be printed when the encrypted image is simply printed.

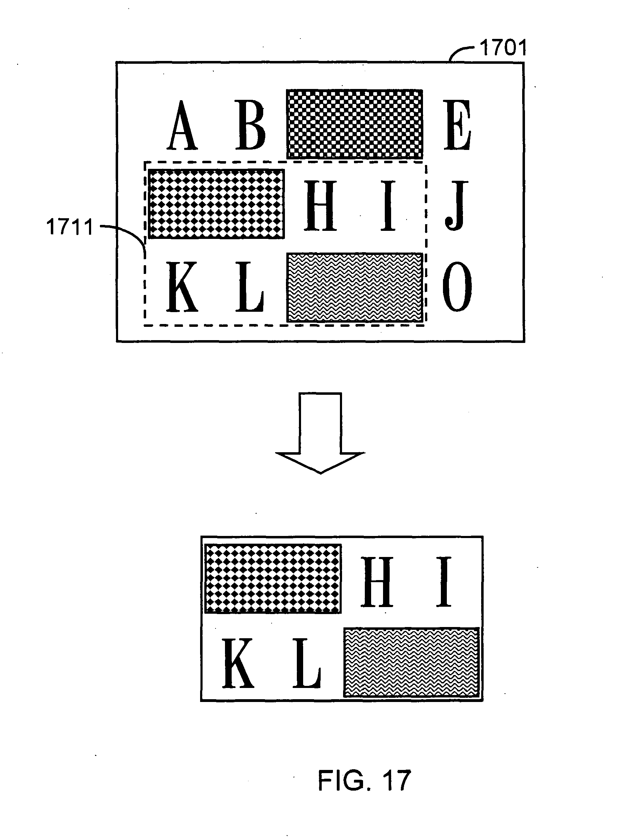

FIG. 17 is a diagram illustrating an example of a process of selecting the decryption target regions performed by an image decryption apparatus according to a first embodiment of the present invention. The decryption process may be performed by the image decryption apparatuses 4201 or 4301. The process of acquiring decryption target regions selected by the decryption user is performed in each of the second decryption process (FIG. 7), the forth decryption process (FIG. 9), the sixth decryption process (FIG. 11), and the eighth decryption process (FIG. 13).

The target region selector 4215 selects the decryption target region from among the encrypted regions within a target area 1711, specified by the decryption user, on the input encrypted image 1701 displayed on the display screen. Thus, the target region selector 4215 may select the decryption target region by requesting the user to specify some of encrypted regions by mouse dragging or clicking on the input encrypted image 1701 and accepting the data of the specified regions.

A process of determining a position of an encrypted region on the encrypted image will be discussed below.

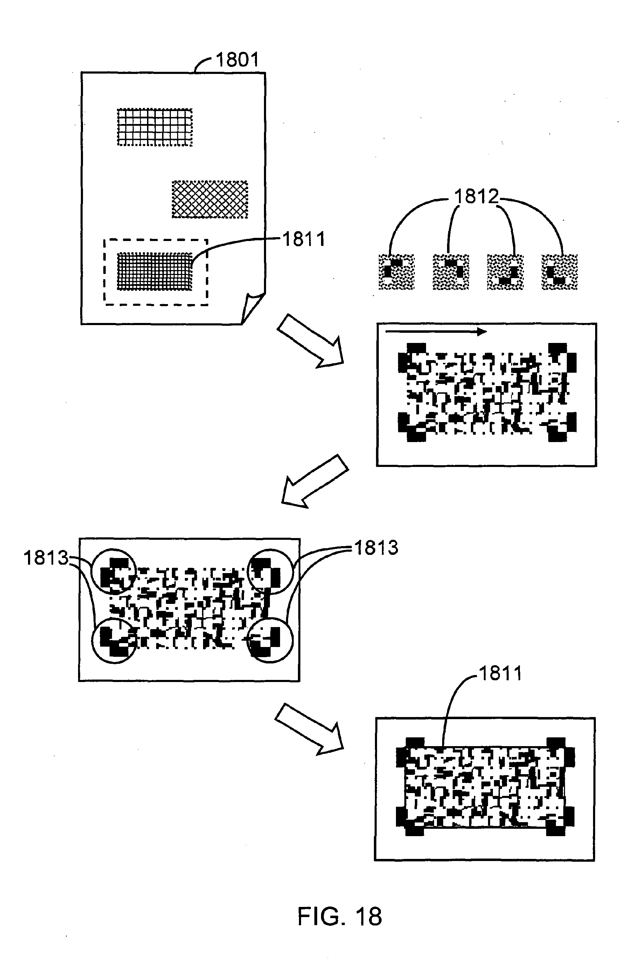

FIG. 18 is a diagram illustrating an example of a process of determining a position of an encrypted region by image recognition performed by an image decryption apparatus according to a first embodiment of the present invention. For example, an encrypted image 1801 having markers 1812 at the four corners of an encrypted region 1811 is generated in the encryption process and these markers 1812 are detected by pattern matching in the decryption process. The position 1813 of the encrypted region 1811 on the encrypted image 1801 is thus detected.

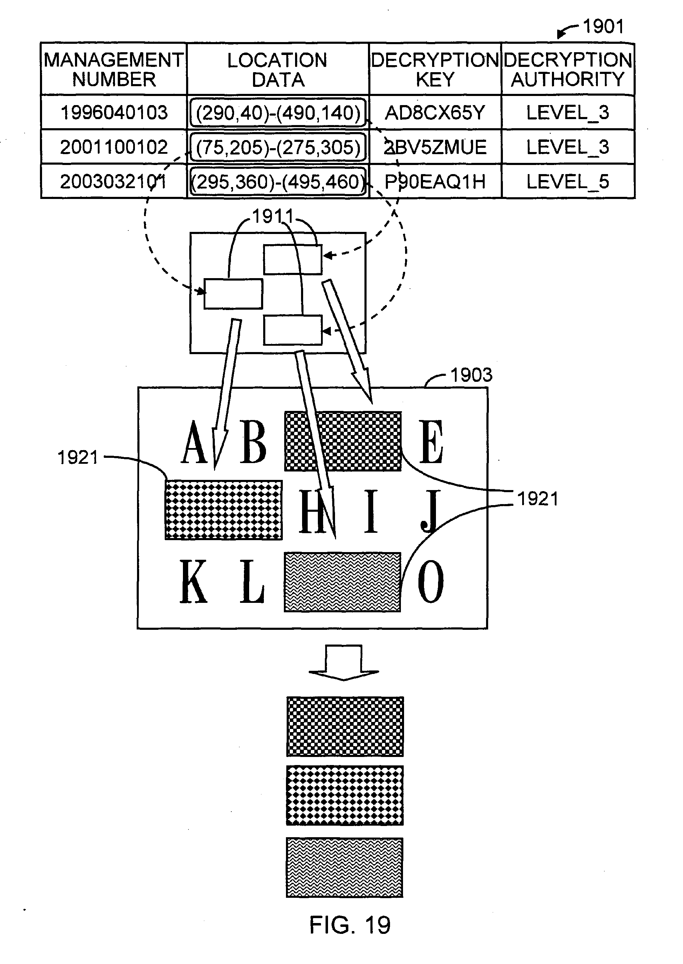

Alternatively, position data of an encrypted region on the encrypted image may be acquired with reference to the decryption information. FIG. 19 is a diagram illustrating an example of a process of determining a position of an encrypted region with reference to decryption information performed by an image decryption apparatus according to a first embodiment of the present invention. In the process, each encrypted region 1911 is virtually drawn on a memory with reference to the decryption information 1901 in order to analyze positional relationship and overlapping relationship of the encrypted regions 1911, and the drawn encrypted regions 1911 are mapped to the encrypted image 1903 displayed on the display screen.

The decryption information is read in accordance with the encryption order when the encrypted region 1911 is virtually drawn on the memory. With reference to a model of the encrypted regions 1911 drawn on the memory, the position 1921 of the encrypted regions 1911 may be correctly determined in view of the overlapping relationship of the encrypted regions 1911 even if the encrypted image 1903 is scale contracted or scale expanded.

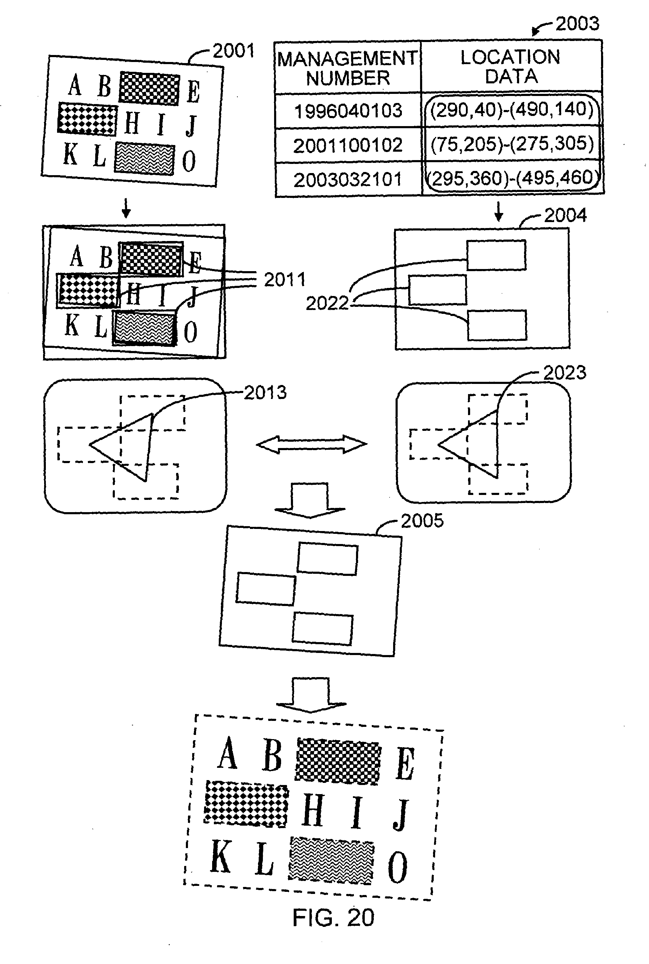

Position data of an encrypted region on the encrypted image may be acquired by image recognition while referencing to the decryption information. FIG. 20 is a diagram illustrating an example of a process of determining a position of an encrypted region by image recognition while referencing to decryption information performed by an image decryption apparatus according to a first embodiment of the present invention. Positions of encrypted regions on an encrypted image that has been distorted due to printing, copying, or scanning may be corrected by comparing relative position of the encrypted regions determined by image recognition with relative position of the encrypted regions on the model drawn on the memory with reference to the decryption information.

Alternatively, a slant of an image may be detected by comparing the markers attached to the four corners of an encrypted region.

In an encrypted image suffering from a rotational distortion, a correction operation for correcting the rotational distortion is needed to acquire the encrypted regions through the image recognition process, and to perform the decryption process.

If the encrypted image 2001 is distorted, a mismatch takes place between the relative position of the encrypted regions 2011 determined by image recognition and relative position of the encrypted regions 2022 on the model 2004 drawn on the memory with reference to the decryption information 2003. For example, when relative position 2013 of centers of a plurality of encrypted regions determined by image recognition is calculated, and then compared with relative position 2023 on the model 2004, an approximate angle of rotation may be estimated. In accordance with the estimated angle of rotation, a rotated model 2005 may be acquired, and then positions of regions on the rotated model 2005 are compared with positions of encrypted regions on the encrypted image. An irregular distortion may be thus extracted.

High-quality decryption is performed by correcting distortion in each encrypted region. By transforming and superimposing decryption results in accordance with the rotated model 2005, images in encrypted regions on a distorted image may be restored.

A process of visually displaying positions of encrypted regions on the display screen of the image decryption apparatus will be discussed.

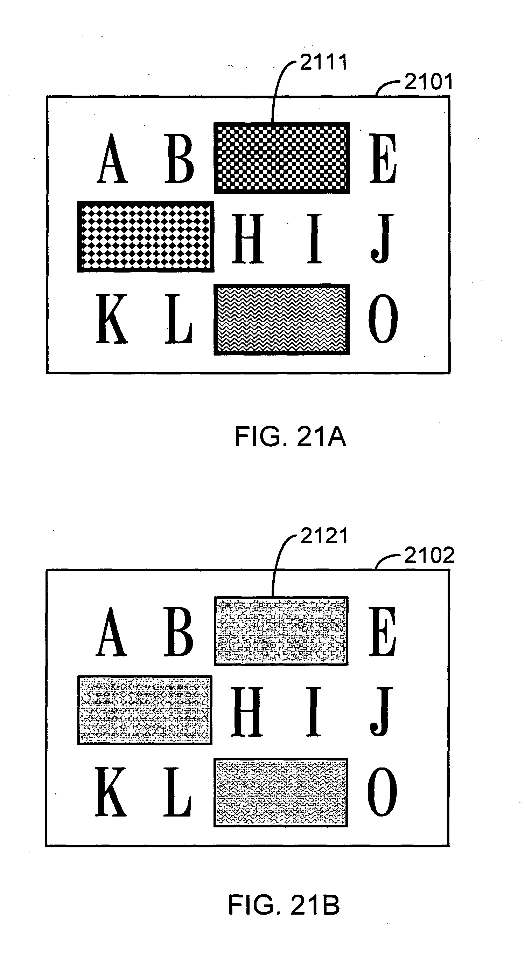

FIGs. 21A and 21B are diagrams illustrating examples of a process of visually displaying positions of encrypted regions performed by an image decryption apparatus according to a first embodiment of the present invention. In the example illustrated in FIG. 21A, a position 2111 of an encrypted region is indicated with a heavy outline on the input encrypted image 2101. In the example illustrated in FIG. 21B, a position 2121 of an encrypted region is indicated with a transmissive color on the input encrypted image 2102. All the encrypted regions are painted, for example, light blue (not shown).

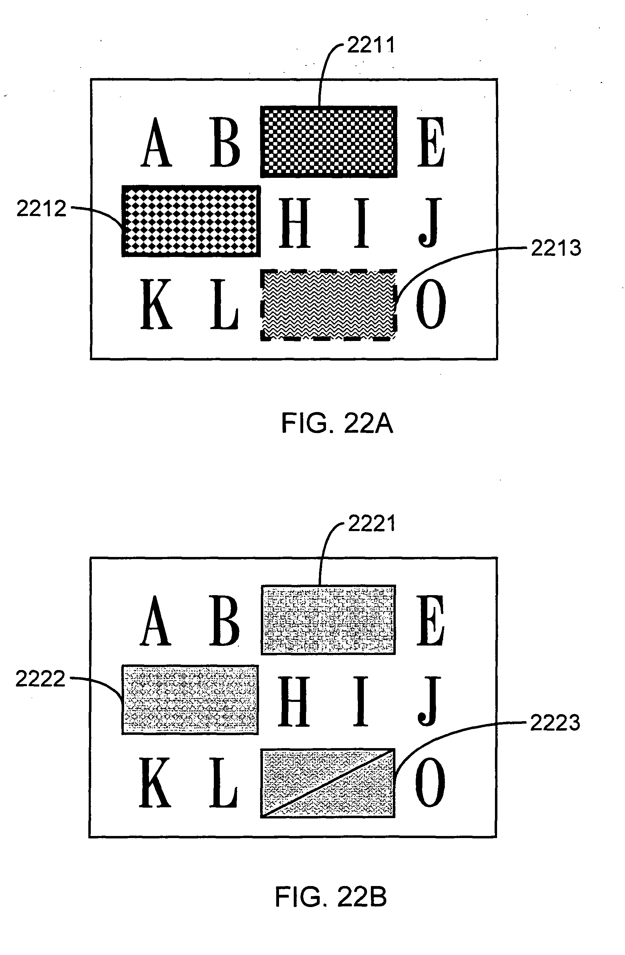

FIGs. 22A and 22B are diagrams illustrating examples of a process of visually displaying an authority levels assigned to encrypted regions performed by an image decryption apparatus according to a first embodiment of the present invention.

The encrypted regions are visually displayed so that an encrypted region assigned an authority level equal to or below the level authorized to the decryption user is distinguishable as "authorized" and an encrypted region assigned an authority level above the level authorized to the decryption user is distinguishable as "unauthorized." For example, in the case of the decryption user having Level_3 (having no authority Level_5), the encrypted region 2211 and the encrypted region 2212, each assigned with an authority Level_3, are indicated as "authorized," and the encrypted region 2213 assigned with an authority Level_5 is indicated as "unauthorized."

In FIG. 22A, an authorized encrypted region is indicated with a solid outline, and an unauthorized encrypted region is indicated with a broken outline. In FIG. 22B, the authorized encrypted regions 2221 and 2222 are painted transmissive light blue, and the unauthorized encrypted region 2223 is painted transmissive light red. When a black and white drawing is employed, since it is difficult to distinguish the two types of encrypted regions, a diagonal line may be drawn on the unauthorized encrypted region to be easily recognized. Since the drawings in the specification are not painted in color, the encrypted regions are drawn in black and white.

As discussed above, encrypted regions are distinctively displayed in accordance with assigned authority levels. Thus, the decryption user may easily learn which encrypted region which the decryption user is authorized to decrypt.

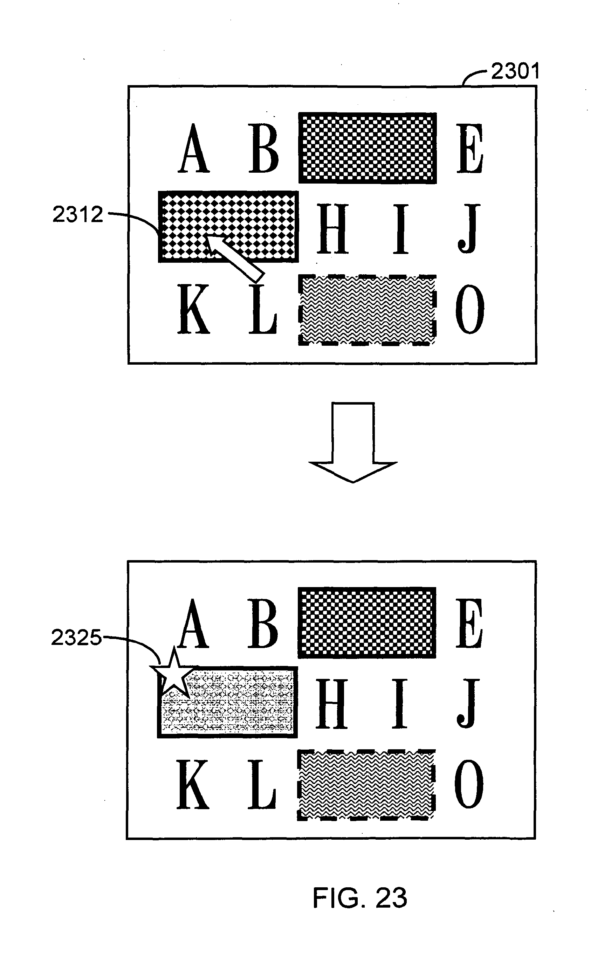

FIG. 23 is a diagram illustrating an example of a process of accepting selection of an encrypted region for decryption performed by an image decryption apparatus according to a first embodiment of the present invention. The process may be performed by the image decryption apparatuses 4201 or 4301. The decryption user selects an encrypted region by a click operation with a pointing device while confirming the decryption authority assigned to the encrypted region displayed as illustrated in FIG. 22A, for example. When the encrypted region 2312 on the encrypted image 2301 is clicked for selection, a region for decryption is painted transmissive pink (in black and white in FIG. 23) and labeled with a star symbol 2325. The encrypted region thus selected by the decryption user is accepted as the decryption target region.

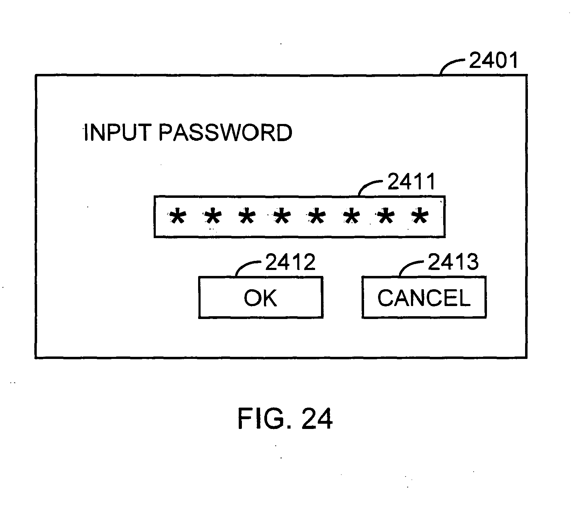

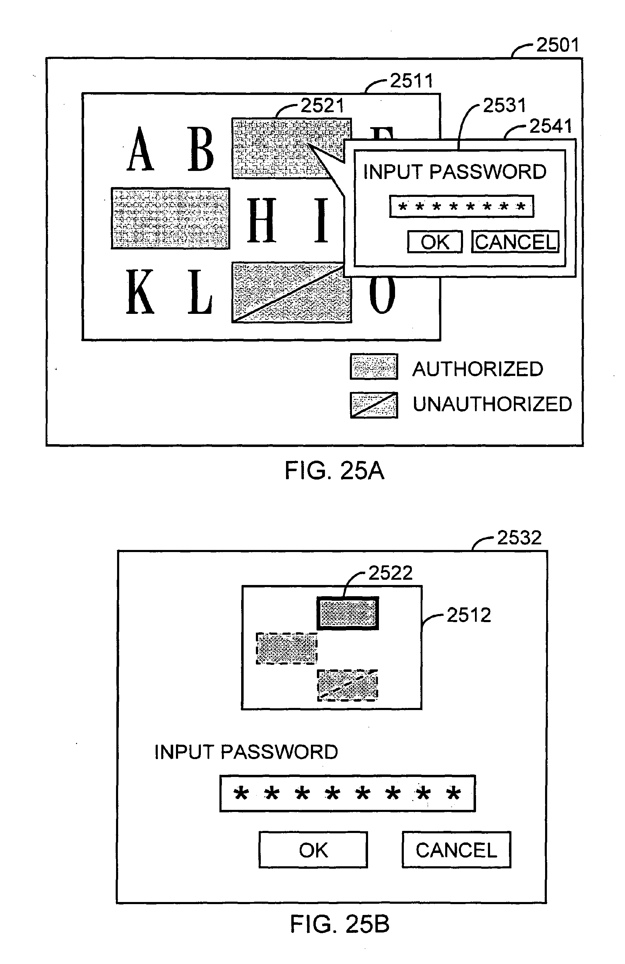

FIGs. 24, 25A, and 25B are diagrams illustrating examples of a process of prompting a decryption user to input a decryption key for each encrypted region performed by an image decryption apparatus according to a first embodiment of the present invention. Fig. 24 illustrates a pop-up dialog box 2401 for password input.

In the center of the pop-up dialog box 2401, a text field 2411 for typing a decryption key (or a password) is arranged. Arranged below the text field 2411 are an "OK" button 2412 and a "Cancel" button 2413.

The above-mentioned dialog box is widely used for a password input on a graphical user interface (GUI) based computer.

FIG. 25A illustrates a screen image 2501 of an encrypted image 2511 with a pop-up dialog box 2531.

In FIG. 25A, the encrypted regions are painted transmissive color as illustrated in FIG. 22B. The pop-up dialog box 2531 is displayed in association with the encrypted region 2521 which is waiting for the decryption key.

As illustrated in FIG. 25A, the pop-up dialog box 2531 for password input appears in a balloon 2541 from the corresponding encrypted region 2521. Thus, with reference to the balloon source, it is clear for the decryption user that the pop-up dialog box 2531 corresponds to the encrypted region 2521.

FIG. 25B illustrates a dialog box 2532 for password input including a shrunken model 2512 of the encrypted regions. The shrunken model 2512 visually indicates a position of the encrypted region 2522 waiting for the decryption key in accordance with the decryption information.

By displaying the dialog box for password input in association with the position of the encrypted region, the decryption user may seldom enter a decryption key for a wrong encrypted region. For example, even if different decryption keys are set in different encrypted regions, the decryption user may learn the right encrypted region when entering the decryption key. The decryption user may therefore be free from being puzzled about inputting the decryption key. Thus, the arrangement may increase the efficiency of the decryption operation.

When a dialog box for password input is presented to the decryption user, an encrypted region waiting for a decryption key is presented visually or audibly. Thus, the decryption user may easily learn which encrypted region needs a decryption key to be input.

### Second Embodiment

In the second embodiment of the present invention, the dialog box for password input as illustrated in FIG. 25A or 25B is successively displayed for each of a plurality of encrypted regions to accept input of the decryption key for each of the encrypted regions on the encrypted image.

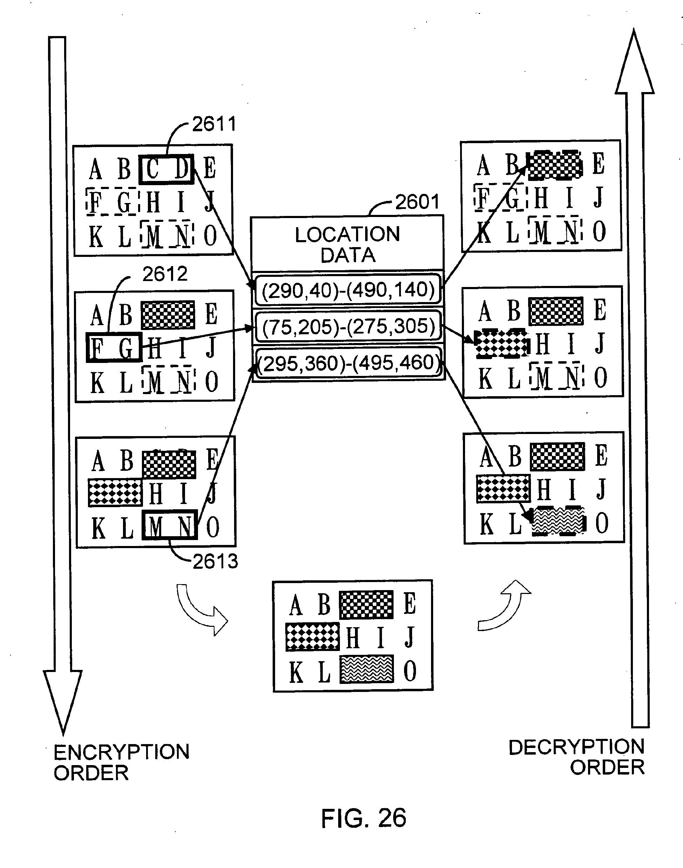

FIG. 26 is a diagram illustrating an example of a process of determining a decryption order performed by an image decryption apparatus according to a first embodiment of the present invention. The decryption order determiner 4216 determines, on the basis of the decryption information, the decryption order needed for execution of the successive prompts for the decryption keys. The encryption process has been performed on the encrypted region 2611, the encrypted region 2612, and the encrypted region 2613 in that order. The decryption information 2601 has also been recorded in that order. To decrypt encrypted images in these encrypted regions, the decryption information 2601 is preferably read in a reverse order.

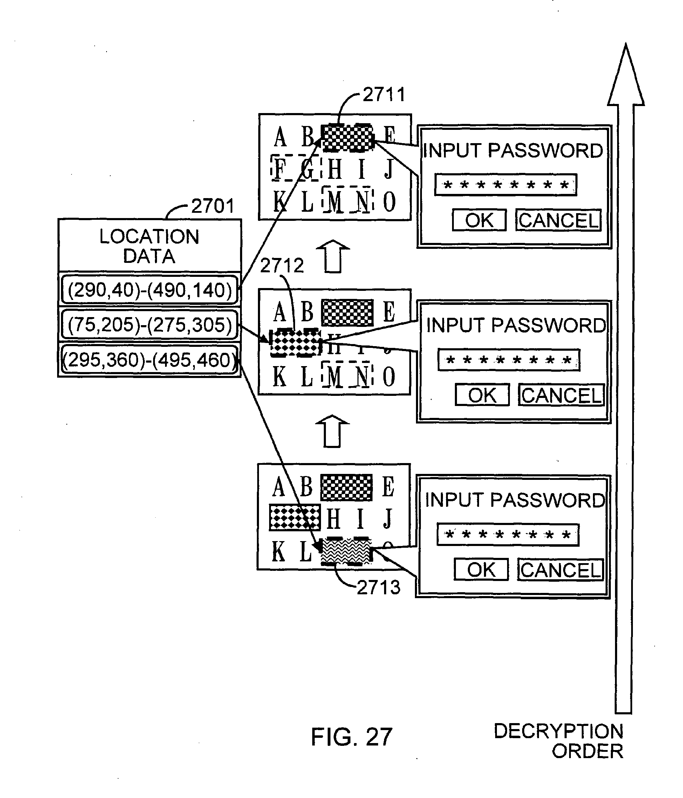

FIG. 27 is a diagram illustrating an example of a process of successively displaying a dialog box for password input in accordance with a determined decryption order performed by an image decryption apparatus according to a second embodiment of the present invention. As illustrated in FIG. 27, the dialog boxes for password input are displayed for the encrypted region 2713, the encrypted region 2712, and the encrypted region 2711, in that order.

By reading the decryption information 2701 in the reverse order, the decryption process may be performed in accordance with the decryption order. Furthermore, generation of a decryption order list based on the decryption information reduces workload on the decryption user using the image decryption apparatus 4201 or 4301. By managing a plurality of encrypted regions having the same decryption key and the same authority level as one group, operations for inputting the decryption key may be reduced.

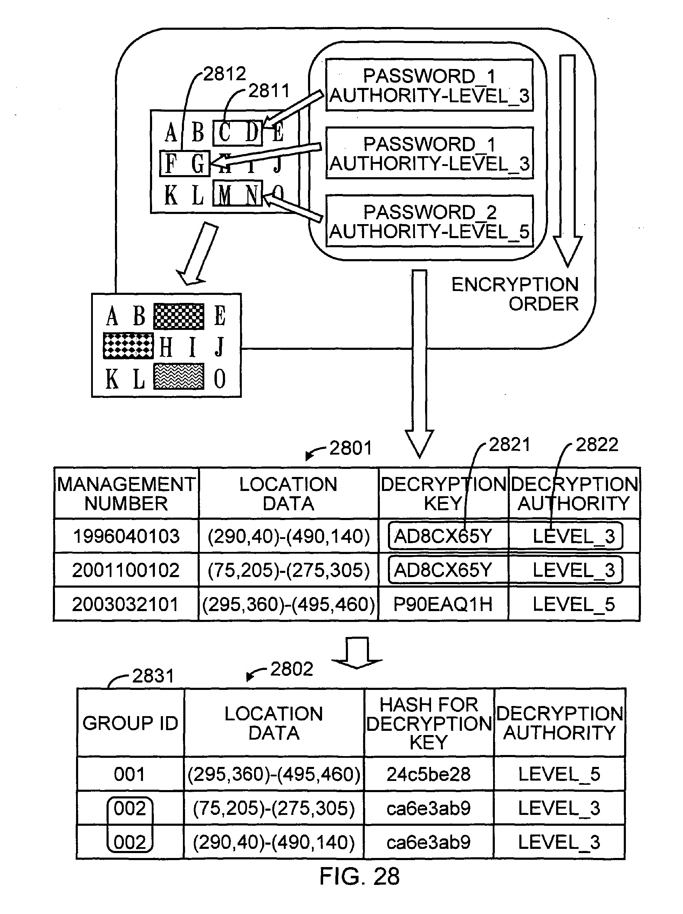

FIG. 28 is a diagram illustrating an example of a process of generating a decryption order list performed by an image decryption apparatus according to a second embodiment of the present invention. By analyzing the decryption information and comparing decryption keys and decryption authority levels for encrypted regions where images therein have been successively encrypted, the decryption order determiner 4216 determines whether the successively encrypted images in the encrypted regions may be decrypted with the same decryption key.

In the example illustrated in FIG. 28, the same decryption key 2821 and the same authority level 2822 are assigned to the encrypted region 2811 and the encrypted region 2812. When the decryption order list 2802 is generated from the decryption information 2801, the above-mentioned determination is performed. By adding a group identification (ID) 2831 to the decryption order list 2802, the acceptance of the decryption key and the image decryption may be performed on a per-group basis.

The management number indicating the encrypted region, which is included in the decryption information generated in the encryption process, may not be necessarily included in the decryption order list. Even if the decryption key itself is contained in the decryption information stored on an external storage, the decryption key may preferably be converted into a hash value when the decryption information acquirer 4219 acquires the decryption information.

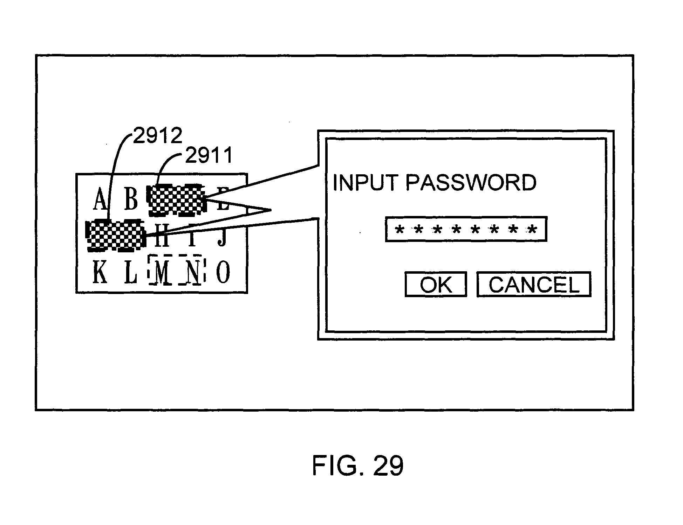

FIG. 29 is a diagram illustrating an example of a process of prompting a decryption user to input a password for two encrypted regions in the same group performed by an image decryption apparatus according to a second embodiment of the present invention. In the example illustrated in FIG. 29, the decryption key acceptor 4217 prompts decryption user to input a password for both the encrypted region 2911 and the encrypted region 2912 which are included in the same group as illustrated in FIG. 28.

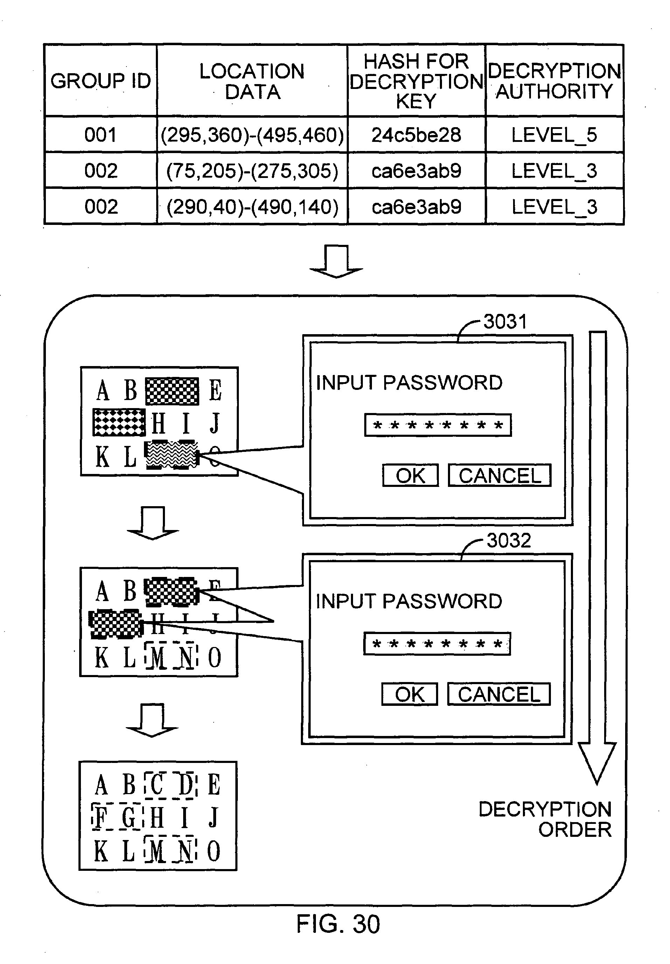

FIG. 30 is a diagram illustrating an example of a process of successively displaying a dialog box for password input performed by an image decryption apparatus according to a second embodiment of the present invention. In the successive process of displaying the dialog boxes 3031 and 3032 for password input, one dialog box 3032 for a plurality of encrypted regions may be displayed. This allows decryption of the plurality of encrypted regions together. The decryption process is then preformed with the input decryption keys. Since the encrypted regions in the same group are decrypted at a time, the decryption user may operate for decryption without confusion while recognizing interim results of the decryption process. In the example illustrated in FIG. 30, the image decryption process is completed by two cycles of decryption operations with two times of displaying the dialog box for password input.

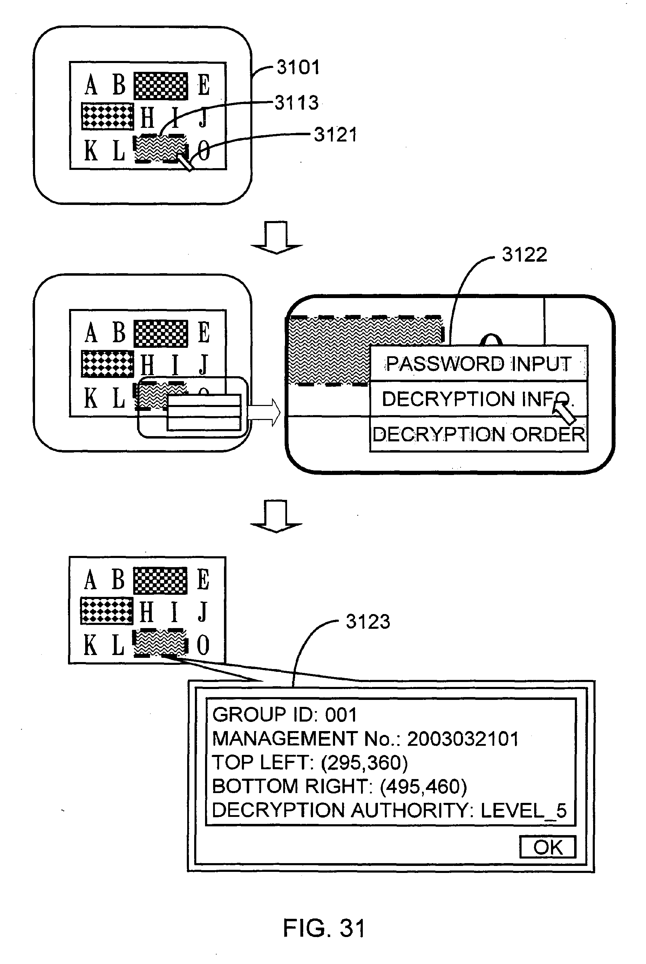

FIG. 31 is a diagram illustrating an example of a process of providing decryption information to a decryption user performed by an image decryption apparatus according to a second embodiment of the present invention. The decryption user selects an encrypted region and confirms decryption information for the encrypted region in a list. On a screen image 3101, the decryption user places a mouse cursor 3121 on an encrypted region 3113 and selects the encrypted region 3113 by clicking with the left button of a mouse to pop up an operation menu 3122. The decryption user then selects "decryption info." in the operation menu 3122 by clicking with the right button of the mouse to pop up a dialog box 3123 for decryption information confirmation. Thus, the decryption user may confirm the decryption information in the list. Neither the decryption key nor the hash value thereof may preferably be displayed in order to prevent an unauthorized person from decrypting the image in the encrypted region.

The list of decryption information allows the decryption user to confirm the position and the authority level of each encrypted region prior to or subsequent to input the password. This method supplements the visual display method using outline drawing or transmissive image drawing. When the decryption user manually selects an encrypted region and inputs a password, this method provides the decryption user with an effective guidance in the identification of each encrypted region.

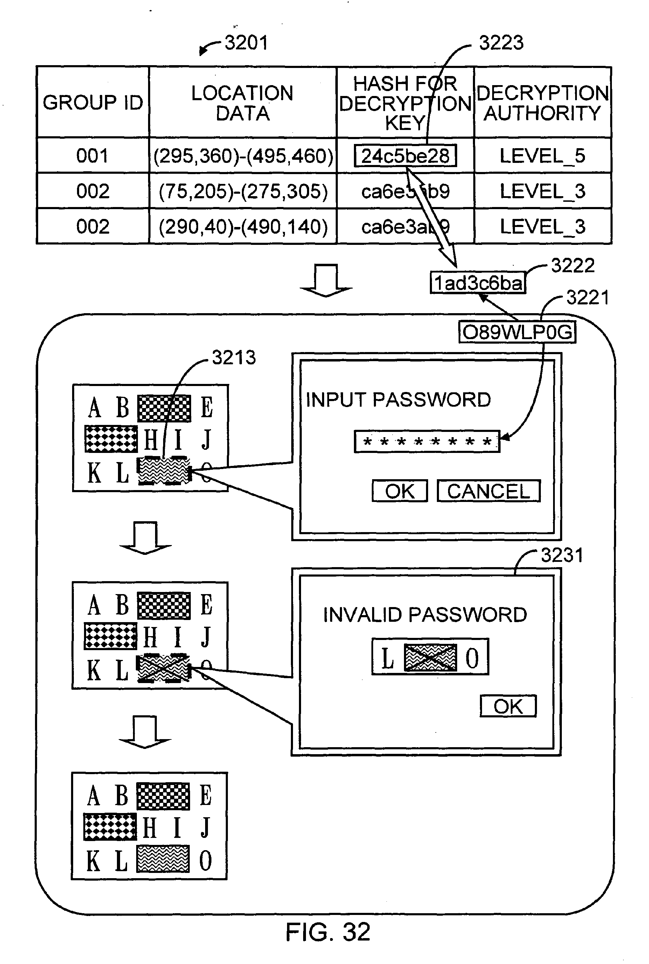

FIG. 32 is a diagram illustrating an example of a process of verifying a password performed by an image decryption apparatus according to a second embodiment of the present invention. The decryption key acceptor 4217 verifies a password input for an encrypted region on the basis of the decryption information. When the decryption key acceptor 4217 has determined that the password is invalid, the display processor 4213 displays a warning. As illustrated in FIG. 32, when a password 3221 whose hash value 3222 does not match the information 3223 of decryption key included in the decryption information 3201 is input for an encrypted region 3213, the decryption key acceptor 4217 determines that an invalid password has been input, and the display processor 4213 displays a dialog box 3231 for alerting the decryption user while indicating the encrypted region in question.

In addition to a visual display, an alert sound may preferably be produced to draw the decryption user's attention.

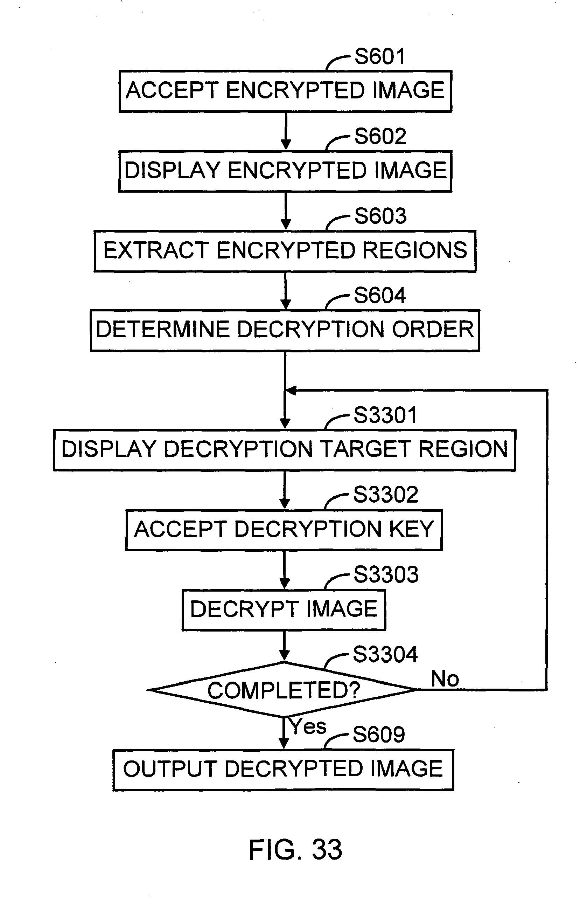

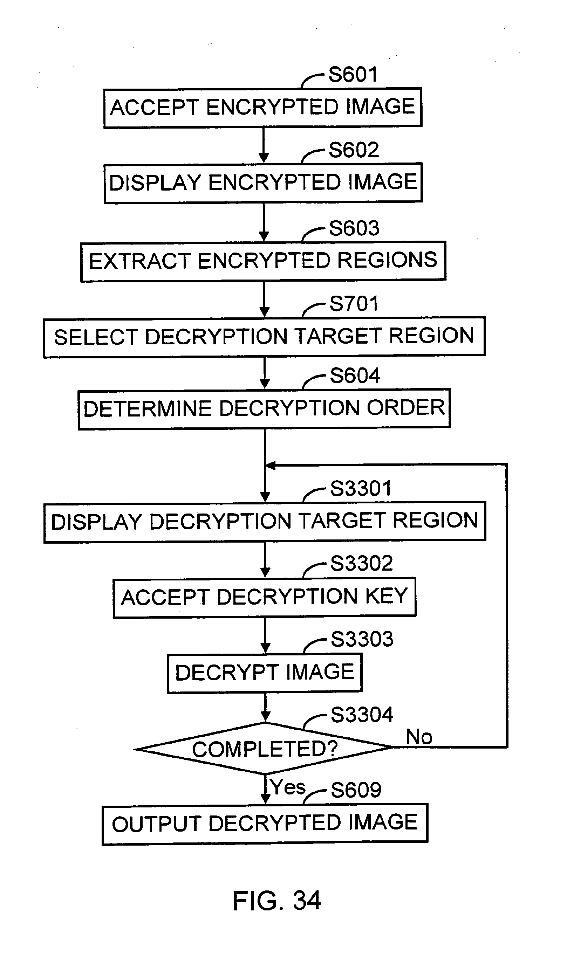

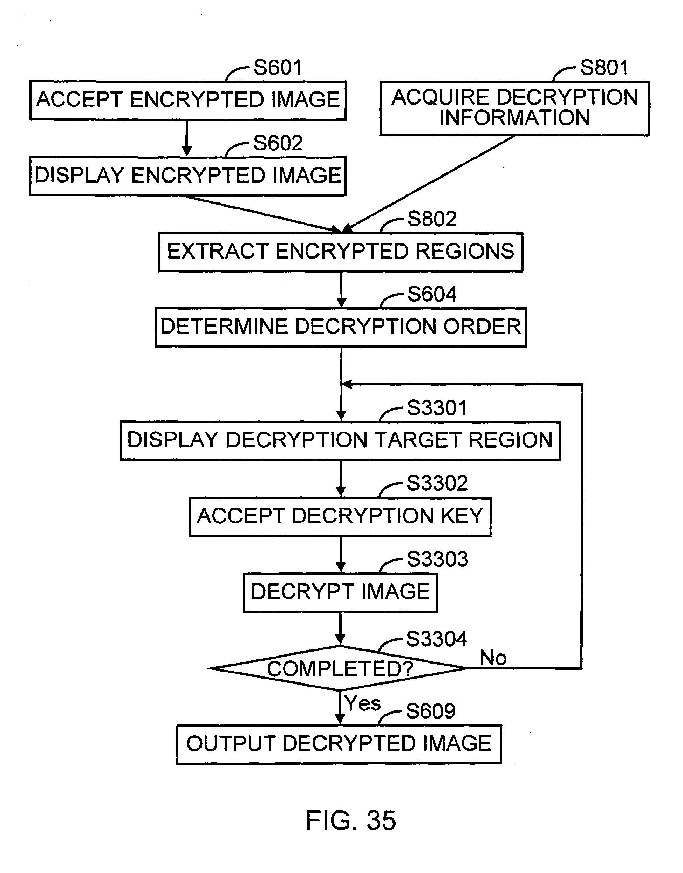

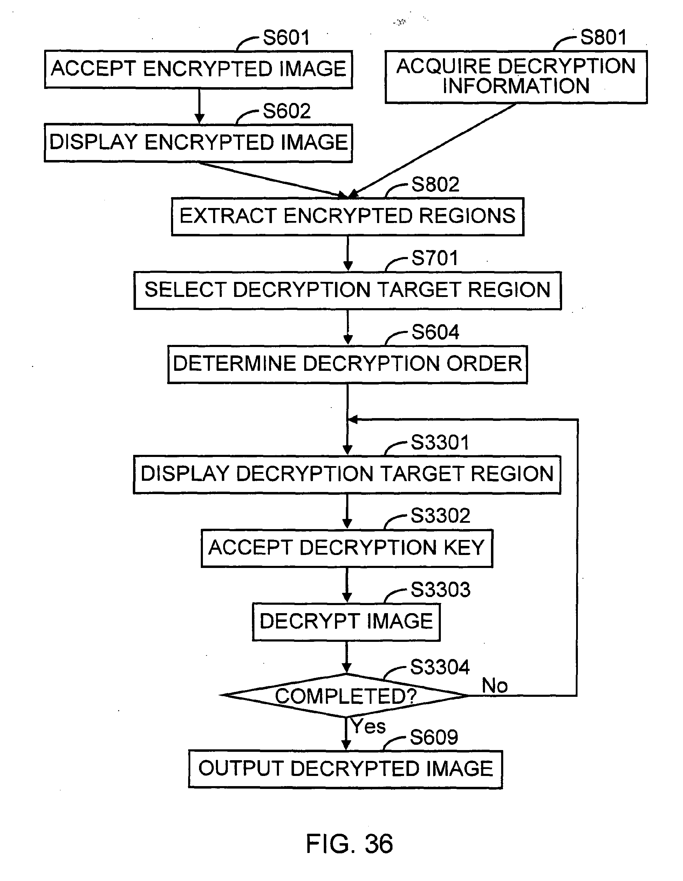

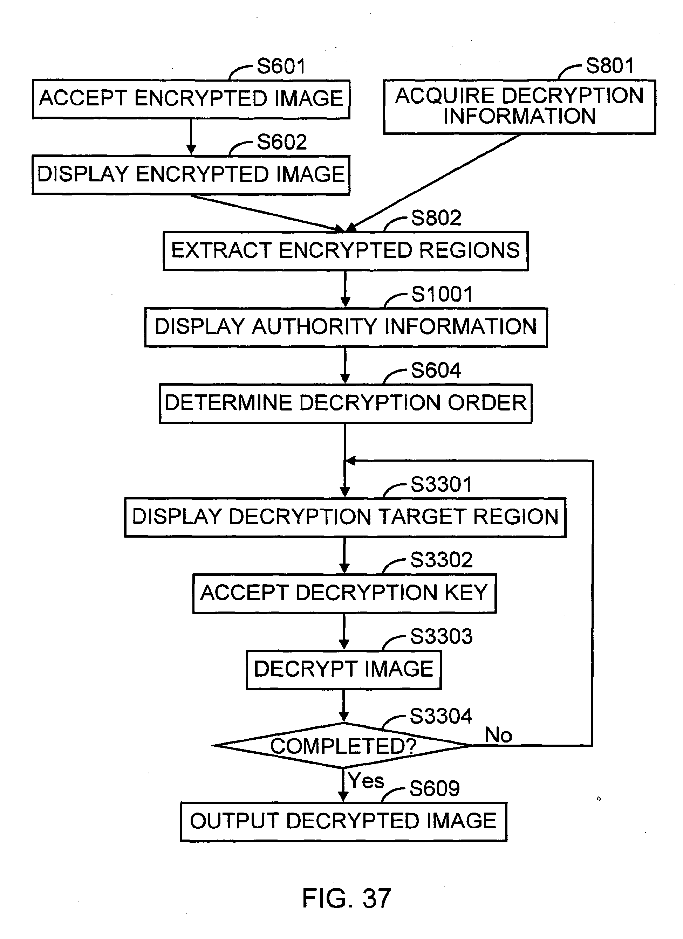

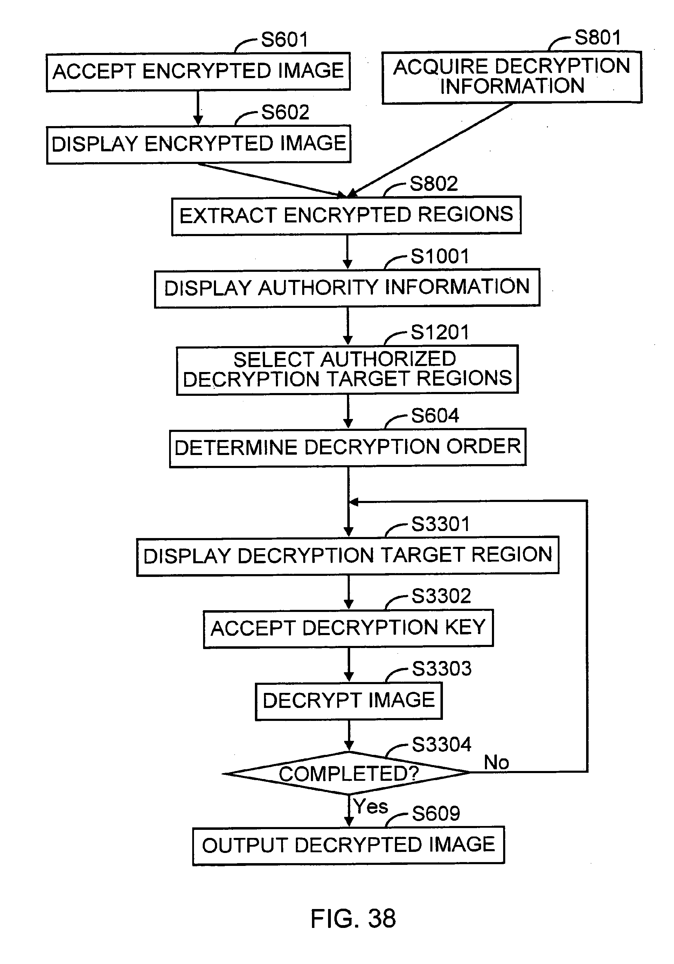

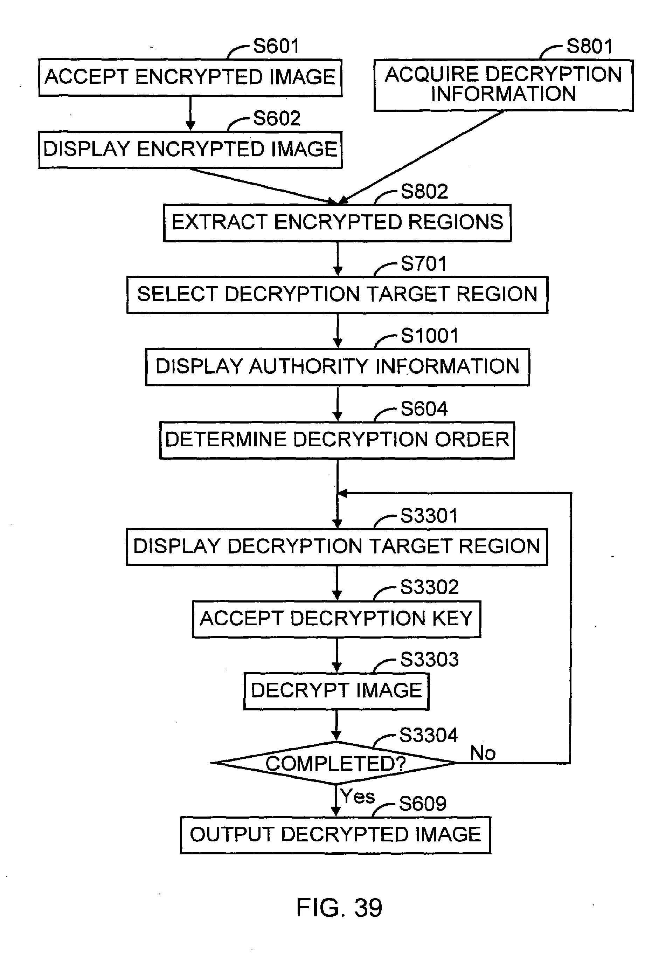

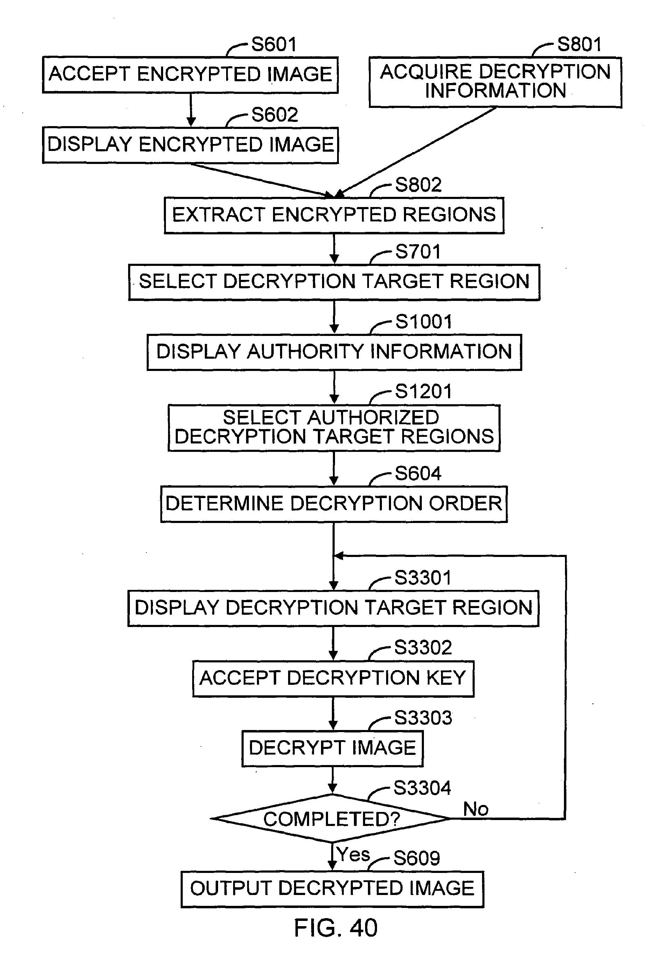

FIGs. 33 - 40 are flowcharts illustrating operational flows of first through eighth decryption processes, respectively, of an image decryption apparatus according to a second embodiment of the present invention. The image decryption apparatus 4201 may operate in accordance with second flowcharts illustrated in FIGs. 33 - 34 instead of first flowcharts illustrated in FIGs. 6 - 9, respectively. The image decryption apparatus 4301 may operate in accordance with second flowcharts illustrated in FIGs. 38 - 40 instead of first flowcharts illustrated in FIGS. 10 - 13, respectively. With reference to FIG. 33, the difference between the second flowchart and the first flowchart will be discussed below.

In the second flowcharts, the decryption process is performed in Operations S3301 - S3304 in accordance with the decryption order determined in Operation S604.

In Operation S3301, the display processor 4213 visually displays, on the display screen, the decryption target regions, where the encrypted images therein may be decrypted with the same decryption key, among all the selected decryption target regions. The display processor 4213 then displays a prompt for inputting a decryption key (or a password) used for decryption of the encrypted images in the decryption target regions in accordance with the decryption order.

In Operation S3302, the decryption key acceptor 4217 accepts the decryption key input by the decryption user.

In Operation S3303, the image decryptor 4218 performs the decryption process on the decryption target regions for which the decryption key has been accepted and the display processor 4213 displays decryption results on the display screen.

In Operation S3304, the decryption controller 4220 checks whether all of the decryption target regions have been applied with the decryption process in accordance with the decryption order. When all of the decryption target regions have not been applied with the decryption process ("No" in Operation SS304), the process returns to Operation S3301. When all of the decryption target regions have been applied with the decryption process ("Yes" in Operation S3304), the process proceeds to Operation S609.

With the image decryption apparatuses 4201 or 4301 working in the process of the second flowcharts, the decryption user may input a decryption key for decryption target regions having the same decryption key displayed in accordance with the decryption order, and may recognize on the display screen results of the decryption with the input decryption key. In summary, the decryption user may interactively proceed with the decryption process while recognizing the interim results of the decryption process.

As discussed above, encrypted regions having the same decryption key and the same decryption authority are grouped in a decryption order list. Thus, the decryption user may simply input the same decryption key only once in response to a prompt generated in accordance with the grouped decryption order list.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. An image decryption apparatus for decrypting an encrypted image having a plurality of encrypted regions with decryption keys input by a user, said image decryption apparatus comprising:
an image data acceptor for accepting image data of the encrypted image;
an encrypted region acquirer for acquiring position data of the encrypted regions;
a target region selector for
selecting all the encrypted regions as decryption target regions, or
acquiring encrypted regions selected by the user as decryption target regions;
a decryption order determiner for determining decryption order for the decryption target regions;
a display processor for
displaying the encrypted image on a display screen, and
displaying images representing positions of the decryption target regions on the encrypted image sequentially in accordance with the decryption order;
a decryption key acceptor for accepting a decryption key corresponding to the decryption target region, the image representing the position of said decryption target region being displayed; and
an image decryptor for decrypting, with an accepted decryption key, the encrypted image in the decryption target region corresponding to the accepted decryption key.

2. The image decryption apparatus of claim 1, further comprising:
a decryption information acquirer for acquiring decryption information including
information of positions of the encrypted regions, and
information of an encryption order of the encrypted regions;
wherein
said decryption order determiner determines the decryption order on the basis of the decryption information.

3. The image decryption apparatus of claim 2, further comprising:
an authorized target region selector for reducing the decryption target regions,
said decryption information including information of an authority level of decryption authority assigned to each of the encrypted regions,
said authorized target region selector
selecting encrypted regions on which the user has the decryption authority from among the decryption target regions, or
acquiring encrypted regions, on which the user has the decryption authority, selected by the user from among the decryption target regions.

4. The image decryption apparatus of claim 3, wherein
said display processor displays images representing, in addition to the positions, authority levels of the decryption target regions.

5. The image decryption apparatus of claim 1, wherein
said image decryption apparatus performs a set of operations for each of the decryption target regions in accordance with the decryption order,
said set of operations including:
displaying, by the display processor, an image representing a position of the decryption target region,
accepting, by the decryption key acceptor, a decryption key corresponding to the decryption target region, and
decrypting, by the image decryptor, the encrypted image in the decryption target region with the decryption key.

6. The image decryption apparatus of claim 2, wherein
said decryption information includes information of a decryption key corresponding to each of the encrypted regions,
said decryption order determiner determines the decryption order while grouping, on the basis of the decryption information, a plurality of decryption target regions corresponding to a same decryption key,
said display processor displays images representing positions of the plurality of decryption target regions together, and
said decryption key acceptor accepts one decryption key for the plurality of decryption target regions.

7. The image decryption apparatus of claim 2, wherein
said display processor
displays a list of the decryption information, or
displays the decryption information hierarchically
for each of the encrypted regions.

8. The image decryption apparatus of claim 2, wherein
said decryption information includes decryption keys each corresponding to one of the encrypted regions, and
said decryption key acceptor
verifies an accepted decryption key with reference to the decryption keys included in the decryption information, and
alerts a warning message to the decryption user or discontinues a process thereof when the accepted decryption key is invalid.

9. An image decryption method executed by an image decryption apparatus for decrypting an encrypted image having a plurality of encrypted regions with decryption keys input by a user, said image decryption method comprising:
accepting image data of the encrypted image;
acquiring position data of the encrypted regions;
performing one of
selecting all the encrypted regions as decryption target regions, or
acquiring encrypted regions selected by the user as decryption target regions;
determining decryption order for the decryption target regions;
displaying the encrypted image on a display screen;
displaying images representing positions of the decryption target regions on the encrypted image sequentially in accordance with the decryption order;
accepting a decryption key corresponding to the decryption target region, the image representing the position of said decryption target region being displayed; and
decrypting, with an accepted decryption key, the encrypted image in the decryption target region corresponding to the accepted decryption key.

10. The image decryption method of claim 9, further comprising:
acquiring decryption information including
information of positions of the encrypted regions, and
information of an encryption order of the encrypted regions;
wherein
the decryption order is determined on the basis of the decryption information.

11. The image decryption method of claim 9, further comprising
performing a set of operations for each of the decryption target regions in accordance with the decryption order,
said set of operations including:
displaying an image representing a position of the decryption target region,
accepting a decryption key corresponding to the decryption target region, and
decrypting the encrypted image in the decryption target region with the decryption key.
